# EUROPEAN PATENT SPECIFICATION

(11) **EP 4 152 740 B1**
(45) Date of publication and mention of the grant of the patent: **22.10.2025**
(21) Application number: 21804478.2
(22) Date of filing: 04.05.2021
(51) Int. Cl.: G03B 3/10, G03B 5/02, G03B 13/36, G03B 17/12, G03B 5/00, G03B 30/00, H04N 23/54, H04N 23/55, H04N 23/57, H04N 23/68

(54) **CAMERA ACTUATOR AND CAMERA DEVICE INCLUDING SAME**
KAMERAAKTUATOR UND KAMERAVORRICHTUNG DAMIT
ACTIONNEUR DE CAMÉRA ET DISPOSITIF DE CAMÉRA LE COMPRENANT

(30) Priority: 11.05.2020 KR 20200055935
(43) Date of publication of application: 22.03.2023
(73) Proprietor: LG Innotek Co., Ltd., Seoul 07796 (KR)
(72) Inventor: LEE, Seong Min, Seoul 07796 (KR)
(74) Representative: DREISS Patentanwälte PartG mbB
(86) International application number: PCT/KR2021/005612
(87) International publication number: WO 2021/230557

(56) References cited:
- JP-A- 2017 173 502
- KR-A- 20180 137 278
- KR-A- 20200 015 051
- KR-A- 20200 020 147
- KR-A- 20200 020 147
- KR-A- 20200 049 907
- US-A1- 2018 364 450
- US-A1- 2019 377 155
- US-A1- 2021 231 904

## Description

### [Technical Field]

The present invention relates to a camera actuator.

### [Background Art]

US 2018/364450 A1 discloses a camera actuator according to the preamble of claim 1. US 2019/377155 A1 discloses an actuator for carrying and actuating a lens having a first optical axis, the lens receiving light folded from a second optical axis substantially perpendicular to the first optical axis, comprising first and second voice coil motors coupled to the lens and first and second linear ball-guided rails operative to create movement of the lens in two substantially orthogonal directions upon actuation by respective voice coil motor. KR 2020 0020147 A relates to a lens driving device and a camera module including the same. The lens driving device comprises: a base assembly; and a first lens assembly including a first lens housing and a first driving unit housing and disposed in the base assembly to move in parallel with a predetermined optical axis. The first driving unit housing includes first guide rail portions at one side and first group balls disposed in the first guide rail portion. The first guide rail portion includes a first guide body, a first guide groove formed in the first guide body, and a first guide protrusion portion formed on one side of the first guide body.

Cameras are devices for taking pictures or videos of subjects and are mounted on portable devices, drones, vehicles, or the like. A camera device may have an image stabilization (IS) function of correcting or preventing the shake of an image caused by the movement of a user in order to improve the quality of the image, an auto focusing function of aligning a focal length of a lens by automatically adjusting an interval between an image sensor and the lens, and a zooming function of capturing a remote subject by increasing or decreasing the magnification of the remote subject through a zoom lens.

Meanwhile, a resolution of the image sensor increases as a pixel has a higher resolution, and thus a size of the pixel becomes smaller, and as the pixel is smaller, the amount of light received for the same time decreases. Therefore, as the camera has a higher resolution pixel, the image shake caused by hand shaking occurring when a shutter speed is decreased in a dark environment may more severely occur. As a representative image stabilization (IS) technique, there is an optical image stabilizer (OIS) technique of correcting a motion by changing a path of light.

According to the general OIS technique, the motion of the camera may be detected through a gyro sensor or the like, and a lens may be tilted or moved based on the detected motion, or a camera module including the lens and the image sensor may be tilted or moved. In order to tilt or move the lens or the camera module including the lens and the image sensor for OIS, it is necessary to additionally secure a space for tilting or moving around the lens or the camera module.

Meanwhile, an actuator for the OIS may be disposed around the lens. In this case, the actuator for the OIS may include actuators in charge of the tilting of two axes, that is, an X axis and a Y axis, perpendicular to a Z-axis direction which is an optical axis direction.

However, according to the needs of ultra-slim and ultra-small camera devices, there is a large space constraint for arranging the actuator for the OIS, and it may be difficult to secure a sufficient space where the lens or the camera module itself including the lens and the image sensor may be tilted or moved for the OIS. In addition, as the camera has a higher resolution pixel, it is preferable that a size of the lens be increased to increase the amount of received light, and there may be a limit to increasing the size of the lens due to a space occupied by the actuator for the OIS.

In addition, when a zoom function, an AF function, and an OIS function are all included in the camera device, there is also a problem that an OIS magnet and an AF or zoom magnet are disposed close to each other to cause magnetic field interference.

In addition, spatial restrictions or limitations for moving the lens are present.

### [Technical Problem]

The present invention is directed to providing a camera actuator in which a first lens assembly and a second lens assembly are moved relative to each other.

In addition, an embodiment is directed to providing a camera actuator in which a first ball and a second ball for moving lens assemblies are positioned on a side surface of an actuator, thereby improving reliability and a driving force.

In addition, an embodiment is directed to providing a camera actuator in which electrical connection is performed through the first ball or the second ball.

In addition, an embodiment is directed to providing a camera actuator applicable to ultra-slim, ultra-small, and high-resolution cameras.

An object of the embodiment is not limited thereto and will also include objects or effects which may be identified from configurations or embodiments.

### [Technical Solution]

The invention is as defined in claim 1.

The first ball may be disposed between the first lens assembly and the guide part, and the second ball may be disposed between the first lens assembly and the second side wall.

A first lens side surface may include a first recess in which the first ball is seated and a second lens side surface may include a second recess in which the second ball is seated.

The guide part may include a body including a rail, a first connecting member positioned on the rail, and a second connecting member disposed between the first recess and the first ball and extending in an optical axis direction.

The first ball may be disposed between the first connecting member and the second connecting member, and may at least partially come into contact with the first connecting member and the second connecting member.

The first connecting member may include an extension extending to an outside of the body.

The camera actuator may further include a board part disposed outside the guide part, and the extension may be electrically connected to the board part.

The first ball may be made of a conductive material.

The driving part includes a first lens driving part including a first coil and a first magnet positioned in the guide part, and a second lens driving part including a second coil positioned inside the first lens assembly and a second magnet positioned between the second side wall and the first lens assembly.

The camera actuator may further include an elastic part configured to connect the second lens assembly and the first lens assembly, and the second coil may be electrically connected to the first connecting member, the first ball, the second connecting member, and the elastic part.

A shape of the first connecting member may correspond to a shape of the rail.

The first lens assembly may be disposed in the base.

The first magnet may be positioned to correspond to the second magnet in a third direction, and the first coil may be positioned to be misaligned with the second coil in the third direction.

The second coil may surround the second lens assembly.

### [Advantageous Effects]

It is possible to implement a camera actuator in which a first lens assembly and a second lens assembly are moved relative to each other.

In addition, according to an embodiment, it is possible to implement a camera actuator in which a first ball and a second ball for moving lens assemblies are positioned on a side surface of an actuator, thereby improving reliability and a driving force.

In addition, according to the embodiment, it is possible to implement a camera actuator in which electrical connection is performed through the first ball or the second ball.

According to the embodiment of the present invention, it is possible to provide a camera actuator applicable to ultra-slim, ultra-small, and high-resolution cameras. In particular, it is possible to efficiently dispose an actuator for OIS even without an increase in the overall size of a camera device.

Tilting in an X-axis direction and tilting in a Y-axis direction do not cause magnetic field interference with each other, it is possible to implement a stable structure for performing the tilting in the X-axis direction and the tilting in the Y-axis direction, and it is possible to achieve a precise OIS function because magnetic field interference with an AF or zooming actuator does not occur either.

It is possible to secure a sufficient amount of light by eliminating the size limitation of the lens and implement OIS with low power consumption.

Various and beneficial advantages and effects of the present invention are not limited to the above-described contents and will be more easily understood in the process of describing specific embodiments of the present invention.

### [Description of Drawings]

FIG. 1 is a perspective view of a camera module.
FIG. 2 is an exploded perspective view of the camera module.
FIG. 3 is a cross-sectional view along line A-A' in FIG. 1.
FIG. 4 is an exploded perspective view of a first camera actuator.
FIG. 5 is a perspective view of the first camera actuator from which a shield can and a substrate are removed.
FIG. 6 is a cross-sectional view along line B-B' in FIG. 5.
FIG. 7 is a cross-sectional view along line C-C' in FIG. 5.
FIG. 8 is a perspective view of a second camera actuator according to an embodiment.
FIG. 9 is an exploded perspective view of the second camera actuator according to the embodiment.
FIG. 10A is a perspective view of a base according to an embodiment.
FIG. 10B is a top view of the base according to the embodiment.
FIG. 10C is a view showing a first side wall of the base according to the embodiment.
FIG. 10D is a view showing a second side wall of the base according to the embodiment.
FIG. 10E is a rear view of the base according to the embodiment.
FIG. 10F is a front view of the base according to the embodiment.
FIG. 11A is a perspective view of a third lens assembly
FIG. 11B is a rear view of the third lens assembly
FIG. 11C is a front view of the third lens assembly
FIG. 12A is a perspective view of a first lens assembly according to an embodiment.
FIG. 12B is a front view of the first lens assembly according to the embodiment.
FIG. 12C is a rear view of the first lens assembly according to the embodiment.
FIG. 12D is a view showing a first lens side surface of the first lens assembly according to the embodiment.
FIG. 12E is a view showing a second lens side surface of the first lens assembly according to the embodiment.
FIG. 13A is a perspective view of a guide part.
FIG. 13B is a perspective view of a body of the guide part
FIG. 13C is a view showing an outer surface of the body of the guide part.
FIG. 13D is a view showing an inner surface of the body of the guide part.
FIG. 13E is a front view of the body of the guide part
FIG. 13F is a rear view of the body of the guide part
FIG. 13G is a perspective view of a first connecting member of the guide part.
FIG. 13H is a perspective view of a second connecting member of the guide part.
FIG. 13I is a view showing an inner side of the guide part
FIG. 14 is a perspective view of a second driving part and a second lens assembly.
FIG. 15 is a perspective view of an elastic part.
FIG. 16 is a perspective view of a second board part
FIG. 17 is a cross-sectional view along line D-D' in FIG. 8.
FIG. 18 is a view showing rear sides of some components of the second camera actuator.
FIG. 19 is a view showing a rear side of the second camera actuator.
FIG. 20 is a perspective view of the guide part.
FIG. 21 is a view showing movement by a first lens driving part according to an embodiment.
FIG. 22 is a view showing movement by a second lens driving part according to an embodiment.
FIG. 23 is a perspective view of a mobile terminal to which the camera module is applied.
FIG. 24 is a perspective view of a vehicle to which the camera module is applied.

### [Modes of the Invention]

Since the present invention may have various changes and have various embodiments, specific embodiments are illustrated and described in the accompanying drawings.

Terms including ordinal numbers such as second or first may be used to describe various components, but the components are not limited by the terms. The terms are used only for the purpose of distinguishing one component from another. For example, a second component may be referred to as a first component, and similarly, the first component may also be referred to as the second component without departing from the scope of the present invention. A term "and/or" includes a combination of a plurality of related listed items or any of a plurality of related listed items.

When a certain component is described as being "connected" or "joined" to another component, it is understood that it may be directly connected or joined to another component, but other components may also be present therebetween. On the other hand, when a certain component is described as being "directly connected" or "directly joined" to another component, it should be understood that other components are not present therebetween.

The terms used in the application are only used to describe specific embodiments and are not intended to limit the present invention. The singular expression includes the plural expression unless the context clearly dictates otherwise. In the application, it should be understood that terms such as "comprise" or "have" are intended to specify that a feature, number, step, operation, component, part, or combination thereof described in the specification is present, but does not preclude the possibility of the presence or addition of one or more other features, numbers, steps, operations, components, parts, or combinations thereof in advance.

Unless defined otherwise, all terms used herein, including technical or scientific terms, have the same meaning as commonly understood by those skill in the art to which the present invention pertains. Terms such as those defined in a commonly used dictionary should be construed as having a meaning consistent with the meaning in the context of the related art and should not be construed in an ideal or excessively formal meaning unless explicitly defined in the application.

Hereinafter, embodiments will be described in detail with reference to the accompanying drawings, and the same or corresponding components are given the same reference numerals regardless of the reference numerals, and overlapping descriptions thereof will be omitted.

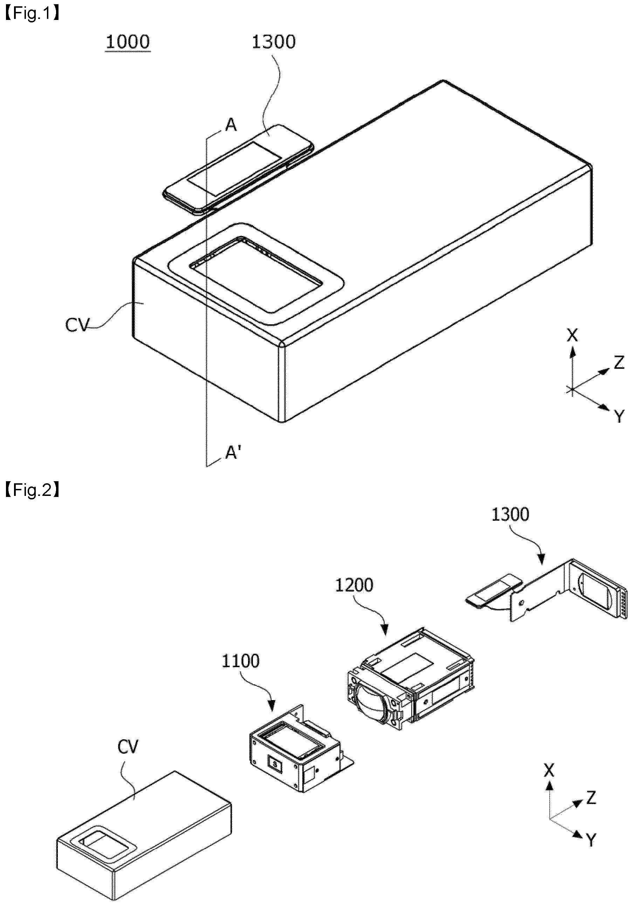

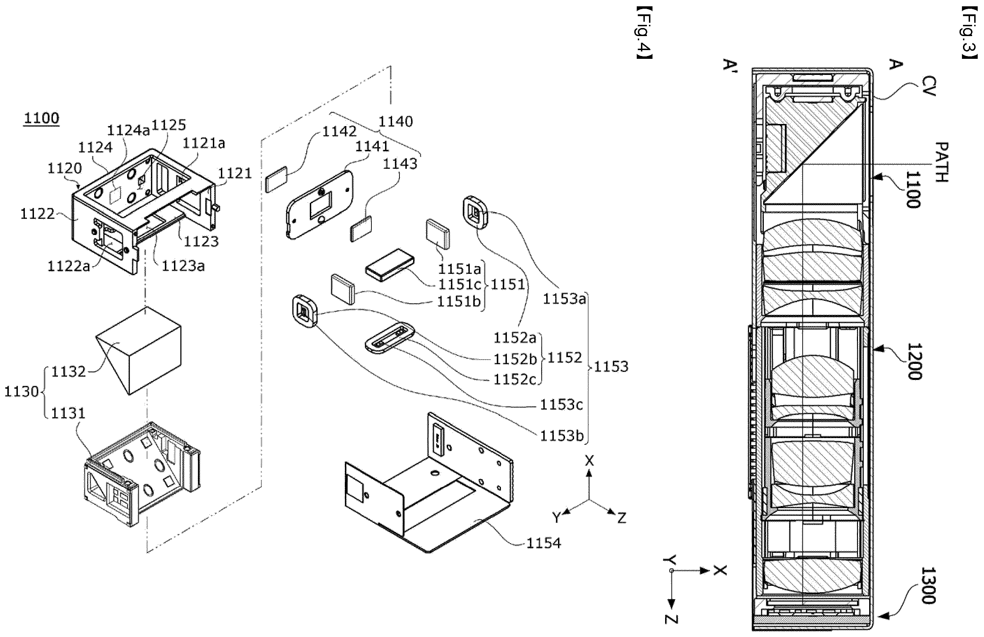

FIG. 1 is a perspective view of a camera module according to a non-claimed example, FIG. 2 is an exploded perspective view of the camera module according to the example, and FIG. 3 is a cross-sectional view along line A-A' in FIG. 1.

Referring to FIGS. 1 and 2, a camera module 1000 according to the example may include a cover CV, a first camera actuator 1100, a second camera actuator 1200, and a circuit board 1300. Here, the first camera actuator 1100 may be used interchangeably with a first actuator, and the second camera actuator 1200 may be used interchangeably with a second actuator.

The cover CV may cover the first camera actuator 1100 and the second camera actuator 1200. It is possible to increase a coupling force between the first camera actuator 1100 and the second camera actuator 1200 by the cover CV.

Furthermore, the cover CV may be made of a material which blocks electromagnetic waves. Therefore, it is possible to easily protect the first camera actuator 1100 and the second camera actuator 1200 in the cover CV.

In addition, the first camera actuator 1100 may be an optical image stabilizer (OIS) actuator.

The first camera actuator 1100 may include a lens. For example, the first camera actuator 1100 may include a fixed focal length lens disposed on a predetermined barrel (not shown). The fixed focal length lens may be referred to as a "single focal length lens" or a "single lens".

The first camera actuator 1100 may change a light path. In the embodiment, the first camera actuator 1100 may change the light path vertically through an optical member (e.g., a mirror or a prism) therein. With this configuration, even when a thickness of a mobile terminal is decreased, a configuration of a lens that is greater than the thickness of the mobile terminal is disposed in the mobile terminal through a change in the light path so that magnification, auto focusing (AF) and OIS functions may be performed.

The second camera actuator 1200 may be disposed at a rear end of the first camera actuator 1100. The second camera actuator 1200 may be coupled to the first camera actuator 1100. In addition, mutual coupling may be performed by various methods.

In addition, the second camera actuator 1200 is a zoom actuator or an AF actuator. For example, the second camera actuator 1200 supports a plurality of lenses and perform the AF function or the zoom function by moving the lenses according to a predetermined control signal of a control part.

The circuit board 1300 may be disposed at a rear end of the second camera actuator 1200. The circuit board 1300 may be electrically connected to the second camera actuator 1200 and the first camera actuator 1100. In addition, a plurality of circuit boards 1300 may be provided.

The camera module according to the embodiment may be formed of a single module or a plurality of camera modules. For example, the plurality of camera modules may include a first camera module and a second camera module.

In addition, the first camera module may include a single actuator or a plurality of actuators. For example, the first camera module may include the first camera actuator 1100 and the second camera actuator 1200.

In addition, the second camera module may be disposed in a predetermined housing (not shown) and include an actuator (not shown) which may drive a lens part. The actuator may be a voice coil motor, a micro actuator, a silicon actuator, or the like and applied in various methods, such as an electrostatic method, a thermal method, a bimorph method, and an electrostatic force method but is not limited thereto. In addition, in the specification, the camera actuator may be referred to as an actuator or the like. In addition, a camera module including a plurality of camera modules may be mounted in various electronic devices such as a mobile terminal.

Referring to FIG. 3, the camera module according to the example may include the first camera actuator 1100 for performing the OIS function and the second camera actuator 1200 for performing the zooming function and the AF function.

Light may be incident into the camera module through an opening region positioned on an upper surface of the first camera actuator 1100. In other words, the light may be incident into the first camera actuator 1100 in an X-axis direction, and a light path may be changed in a vertical direction (e.g., a Z-axis direction) through the optical member. In addition, the light may pass through the second camera actuator 1200 and may be incident on an image sensor IS positioned at one end of the second camera actuator 1200 (PATH). Therefore, the optical axis direction is the Z axis direction, which is an incident direction of light on the image sensor. For example, the optical axis is a central axis of incident light, but hereinafter corresponds to the Z-axis direction in the drawing as a movement direction of light after being reflected through the optical member.

In addition, in the specification, a bottom surface refers to one side in the first direction. In addition, the first direction is the X-axis direction in the drawing and may be used interchangeably with the second axis direction or the like. The second direction is the Y-axis direction in the drawing and may be used interchangeably with the first axis direction. The second direction is a direction perpendicular to the first direction. In addition, the third direction is the Z-axis direction in the drawing and may be used interchangeably with the third axis direction. The third direction is perpendicular to both the first direction and the second direction. Here, the third direction (Z-axis direction) corresponds to the direction of the optical axis, and the first direction (X-axis direction) and the second direction (Y-axis direction) are directions perpendicular to the optical axis and may be tilted by the first camera actuator. A detailed description thereof will be given below.

In addition, in the following description of the first camera actuator 1100 and the second camera actuator 1200, the optical axis direction is the third direction (Z axis direction) and will be described below based thereon.

In addition, with this configuration, the camera module according to the embodiment may reduce spatial limitations of the first camera actuator and the second camera actuator by changing the light path. In other words, the camera module according to the embodiment may extend the light path while minimizing the thickness of the camera module in response to the change in the light path. Furthermore, it should be understood that the second camera actuator may provide a high range of magnification by controlling a focus or the like in the extended light path.

In addition, the camera module according to the embodiment may implement the OIS by controlling the light path through the first camera actuator, thereby minimizing the occurrence of a decentering or tilting phenomenon and exerting the best optical characteristics.

Furthermore, the second camera actuator 1200 includes an optical system and a lens driving part. For example, at least one of a first lens assembly, a second lens assembly, a third lens assembly, and a guide pin may be disposed in the second camera actuator 1200.

In addition, the second camera actuator 1200 includes a coil and a magnet and perform a high-magnification zooming function.

For example, the first lens assembly and the second lens assembly are a moving lens for moving through the coil, the magnet, and the guide pin, and the third lens assembly may be a fixed lens, but the present invention is not limited thereto. For example, the third lens assembly may perform a function of a focator by which light forms an image at a specific position, and the first lens assembly may perform a function of a variator for re-imaging an image formed at the third lens assembly, which is the focator, at another position. Meanwhile, the first lens assembly may be in a state in which a magnification change is large because a distance to a subject or an image distance is largely changed, and the first lens assembly, which is the variator, may play an important role in the focal length or magnification change of the optical system. Meanwhile, image points of an image formed at the first lens assembly, which is the variator, may be slightly different depending on a position. Therefore, the second lens assembly may perform a position compensation function for the image formed by the variator. For example, the second lens assembly may perform a function of a compensator for accurately forming an image at an actual position of the image sensor using the image points of the image formed at the first lens assembly which is the variator. The first lens assembly and the second lens assembly are driven by an electromagnetic force due to the interaction between the coil and the magnet. The above description may be applied to a lens assembly to be described below.

Meanwhile, when the OIS actuator and the AF actuator or the zoom actuator are disposed according to the embodiment of the present invention, the magnetic field interference with the AF magnet or the zoom magnet can be prevented when the OIS is driven. Since a first driving magnet of the first camera actuator 1100 is disposed separately from the second camera actuator 1200, the magnetic field interference between the first camera actuator 1100 and the second camera actuator 1200 can be prevented. In the specification, the OIS may be used interchangeably with terms such as hand shaking correction, optical image stabilization, optical image correction, shake correction, and the like.

FIG. 4 is an exploded perspective view of the first camera actuator.

Referring to FIG. 4, the first camera actuator 1100 includes a first shield can (not shown), a first housing 1120, a mover 1130, a rotational part 1140, and a first driving part 1150.

The mover 1130 may include a holder 1131 and an optical member 1132 seated on the holder 1131. The mover 1130 may change the path of the incident light. In addition, the rotational part 1140 includes a rotational plate 1141, a first magnetic substance 1142 having a coupling force with the rotational plate 1141, and a second magnetic substance 1143 positioned in the rotational plate 1141. In addition, the first driving part 1150 includes a driving magnet 1151, a driving coil 1152, a Hall sensor part 1153, and a first board part 1154.

The first shield can (not shown) may be positioned on an outermost side of the first camera actuator 1100, and positioned to surround the rotational part 1140 and the first driving part 1150 to be described below.

The first shield can (not shown) may block or reduce electromagnetic waves generated from the outside. Therefore, it is possible to decrease the occurrence of a malfunction of the rotational part 1140 or the first driving part 1150.

The first housing 1120 may be positioned inside the first shield can (not shown). In addition, the first housing 1120 may be positioned inside the first board part 1154 to be described below. The first housing 1120 may be fastened by being inserted or fitted into the first shield can (not shown).

The first housing 1120 may be formed of a plurality of housing side portions. The first housing 1120 may include a first housing side portion 1121, a second housing side portion 1122, a third housing side portion 1123, and a fourth housing side portion 1124.

The first housing side portion 1121 and the second housing side portion 1122 may be disposed to face each other. In addition, the third housing side portion 1123 and the fourth housing side portion 1124 may be disposed between the first housing side portion 1121 and the second housing side portion 1122.

The third housing side portion 1123 may be in contact with the first housing side portion 1121, the second housing side portion 1122, and the fourth housing side portion 1124. In addition, the third housing side portion 1123 may include a bottom surface as a lower side portion of the first housing 1120.

In addition, the first housing side portion 1121 may include a first housing hole 1121a. A first coil 1152a to be described below may be positioned in the first housing hole 1121a.

In addition, the second housing side portion 1122 may include a second housing hole 1122a. In addition, a second coil 1152b to be described below may be positioned in the second housing hole 1122a.

The first coil 1152a and the second coil 1152b may be coupled to the first board part 1154. In the embodiment, the first coil 1152a and the second coil 1152b may be electrically connected to the first board part 1154 so that a current may flow. The current is a component of an electromagnetic force which may allow the second camera actuator to be tilted with respect to the X-axis.

In addition, the third housing side portion 1123 may include a third housing hole 1123a. A third coil 1152c to be described below may be positioned in the third housing hole 1123a. The third coil 1152c may be coupled to the first board part 1154. In addition, the third coil 1152c may be electrically connected to the first board part 1154 so that a current may flow. The current is a component of an electromagnetic force which may allow the second camera actuator to be tilted with respect to the Y-axis.

The fourth housing side portion 1124 may include a first housing groove 1124a. A first magnetic substance 1142 to be described below may be disposed in a region facing the first housing groove 1124a. Therefore, the first housing 1120 may be coupled to the rotational plate 1141 by a magnetic force or the like.

In addition, the first housing groove 1124a according to the embodiment may be positioned on an inner surface or outer surface of the fourth housing side portion 1124. Therefore, the first magnetic substance 1142 may be disposed to correspond to a position of the first housing groove 1124a.

In addition, the first housing 1120 may include an accommodating part 1125 formed by the first to fourth housing side portions 1121 to 1224. The mover 1130 may be positioned in the accommodating part 1125.

The mover 1130 includes the holder 1131 and the optical member 1132 seated on the holder 1131.

The holder 1131 may be seated on the accommodating part 1125 of the first housing 1120. The holder 1131 may include outer surfaces of first to fourth prisms corresponding to the first housing side portion 1121, the second housing side portion 1122, the third housing side portion 1123, and the fourth housing side portion 1124, respectively.

A seating groove in which the second magnetic substance 1143 may be seated may be disposed on the outer surface of the fourth prism facing the fourth housing side portion 1124.

The optical member 1132 may be seated on the holder 1131. To this end, the holder 1131 may have a seating surface, and the seating surface may be formed by an accommodating groove. The optical member 1132 may include a reflecting part disposed therein. However, the present invention is not limited thereto. In addition, the optical member 1132 may reflect light reflected from the outside (e.g., an object) into the camera module. In other words, the optical member 1132 can reduce spatial limitations of the first camera actuator and the second camera actuator by changing the path of the reflected light. Therefore, it should be understood that the camera module may also provide a high range of magnification by extending the light path while minimizing its thickness. For example, the optical member 1132 may include a prism, a mirror, or the like.

The rotational part 1140 includes the rotational plate 1141, the first magnetic substance 1142 having a coupling force with the rotational plate 1141, and the second magnetic substance 1143 positioned in the rotational plate 1141.

The rotational plate 1141 may be coupled to the mover 1130 and the first housing 1120 described above. The rotational plate 1141 may include an additional magnetic substance (not shown) positioned therein.

In addition, the rotational plate 1141 may be disposed adjacent to the optical axis. Therefore, the actuator according to this example may easily change the light path according to first and second axis tilt to be described below.

The rotational plate 1141 may include a first protrusion disposed spaced apartin the first direction (X-axis direction) and a second protrusion disposed spaced apartin the second direction (Y-axis direction). In addition, the first protrusion and the second protrusion may protrude in opposite directions. A detailed description thereof will be given below.

In addition, the first magnetic substance 1142 may include a plurality of yokes, and the plurality of yokes may be positioned to face each other with respect to the rotational plate 1141. The first magnetic substance 1142 may be formed of a plurality of yokes facing each other. In addition, the rotational plate 1141 may be positioned between the plurality of yokes.

The first magnetic substance 1142 may be positioned in the first housing 1120 as described above. In addition, as described above, the first magnetic substance 1142 may be seated on an inner surface or outer surface of the fourth housing side portion 1124. For example, the first magnetic substance 1142 may be seated in a groove formed in the outer surface of the fourth housing side portion 1124. Alternatively, the first magnetic substance 1142 may be seated in the first housing groove 1124a described above.

In addition, the second magnetic substance 1143 may be positioned on an outer surface of the mover 1130, particularly, the holder 1131. With this configuration, the rotational plate 1141 may be easily coupled to the first housing 1120 and the mover 1130 by a coupling force caused by an internal magnetic force between the second magnetic substance 1143 and the first magnetic substance 1142.

Positions of the first magnetic substance 1142 and the second magnetic substance 1143 may be moved to each other. For example, an attractive force or a repulsive force may act between the first magnetic substance 1142 and the second magnetic substance 1143. As for the attractive force, the attractive force between the first magnetic substance 1142 and the second magnetic substance 1143 may press the rotational plate 1141 between the holder and the housing. Therefore, a posture or position of the rotational plate 1141 may be maintained except for the X/Y tilts by the first driving part 1150.

The first driving part 1150 includes the driving magnet 1151, the driving coil 1152, the Hall sensor part 1153, and the first board part 1154.

The driving magnet 1151 may include a plurality of magnets. **In** the embodiment, the driving magnet 1151 may include a first magnet 1151a, a second magnet 1151b, and a third magnet 1151c.

Each of the first magnet 1151a, the second magnet 1151b, and the third magnet 1151c may be positioned on the outer surface of the holder 1131. In addition, the first magnet 1151a and the second magnet 1151b may be positioned to face each other. **In** addition, the third magnet 1151c may be positioned on a bottom surface of the outer surface of the holder 1131. A detailed description thereof will be given below.

The driving coil 1152 may include a plurality of coils. In this example, the driving coil 1152 may include a first coil 1152a, a second coil 1152b, and a third coil 1152c.

The first coil 1152a may be positioned to face the first magnet 1151a. Therefore, the first coil 1152a may be positioned in the first housing hole 1121a of the first housing side portion 1121 as described above.

In addition, the second coil 1152b may be positioned to face the second magnet 1151b. Therefore, the second coil 1152b may be positioned in the second housing hole 1122a of the second housing side portion 1122 as described above.

The first coil 1152a may be positioned to face the second coil 1152b. In other words, the first coil 1152a may be positioned symmetrically with the second coil 1152b with respect to the first direction (X-axis direction). This may also be applied to the first magnet 1151a and the second magnet 1151b in the same manner. In other words, the first magnet 1151a and the second magnet 1151b may be symmetrically positioned with respect to the first direction (X-axis direction). In addition, the first coil 1152a, the second coil 1152b, the first magnet 1151a, and the second magnet 1151b may be disposed to at least partially overlap each other in the second direction (Y-axis direction). With this configuration, the X-axis tilting may be accurately performed without inclination to one side by an electromagnetic force between the first coil 1152a and the first magnet 1151a and an electromagnetic force between the second coil 1152b and the second magnet 1151b.

The third coil 1152c may be positioned to face the third magnet 1151c. Therefore, the third coil 1152c may be positioned in the third housing hole 1123a of the third housing side portion 1123 as described above. The third coil 1152c may perform Y-axis tilting of the mover 1130 and the rotational part 1140 with respect to the first housing 1120 by generating an electromagnetic force with the third magnet 1151c.

Here, the X-axis tilting refers to tilting with respect to the X-axis, and the Y-axis tilting refers to tilting with respect to the Y-axis.

The Hall sensor part 1153 may include a plurality of Hall sensors. The Hall sensor corresponds to a "position sensor" to be described below and is used interchangeably therewith. Furthermore, the Hall sensor may be used as various terms, such as a position detecting sensor, a position detecting part, and a position sensing part. In the embodiment, the Hall sensor part 1153 may include a first Hall sensor 1153a, a second Hall sensor 1153b, and a third Hall sensor 1153c.

The first Hall sensor 1153a may be positioned inside the first coil 1152a. In addition, the second Hall sensor 1153b may be disposed symmetrically with the first Hall sensor 1153a with respect to the first direction (X-axis direction) and the third direction (Z-axis direction). **In** addition, the second Hall sensor 1153b may be positioned inside the second coil 1152b.

The first Hall sensor 1153a may detect a change in magnetic flux inside the first coil 1152a. **In** addition, the second Hall sensor 1153b may detect a change in magnetic flux in the second coil 1152b. Therefore, position sensing between the first and second magnets 1151a and 1151b and the first and second Hall sensors 1153a and 1153b may be performed. Therefore, the first and second coils (1152a, 1152b) the second camera actuator according to the embodiment may control the X-axis tilt.

**In** addition, the third Hall sensor 1153c may be positioned inside the third coil 1152c. The third Hall sensor 1153c may detect a change in magnetic flux inside the third coil 1152c. Therefore, position sensing between the third magnet 1151c and the third Hall sensor 1153c may be performed. Therefore, the second camera actuator according to the embodiment may control the Y-axis tilt.

The first board part 1154 may be positioned under the first driving part 1150. The first board part 1154 may be electrically connected to the driving coil 1152 and the Hall sensor part 1153. For example, the first board part 1154 may be coupled to the driving coil 1152 and the Hall sensor part 1153 by a surface mount technology (SMT). However, the present invention is not limited to the method.

The first board part 1154 may be positioned between the first shield can (not shown) and the first housing 1120 and coupled to the shield can 1101 and the first housing 1120. The coupling method may be variously performed as described above. In addition, the driving coil 1152 and the Hall sensor part 1153 may be positioned in an outer surface of the first housing 1120 through the coupling.

The first board part 1154 may include a circuit board having a wiring pattern which may be electrically connected, such as a rigid printed circuit board (rigid PCB), a flexible PCB, and a rigid-flexible PCB. However, the present invention is not limited to the type.

A detailed description between the Hall sensor part 1153 and the first board part 1154 to be described below will be described below.

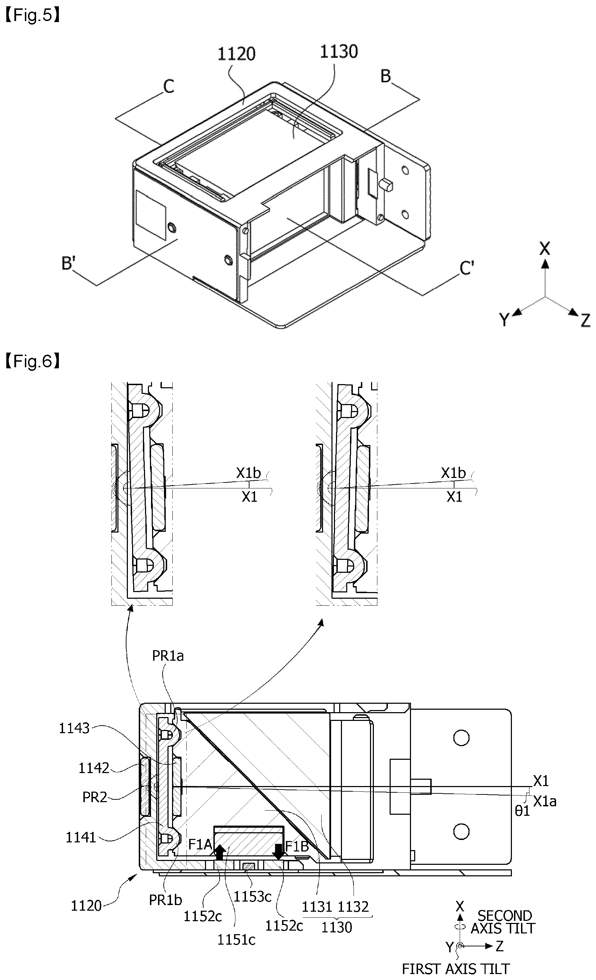

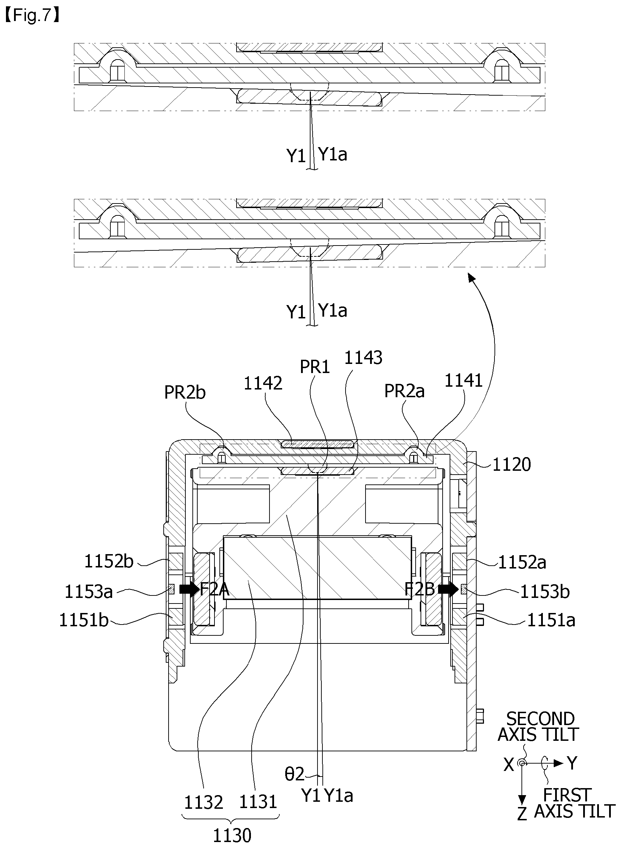

FIG. 5 is a perspective view of the first camera actuator according to the embodiment from which a shield can and a substrate are removed, FIG. 6 is a cross-sectional view along line B-B' in FIG. 5, and FIG. 7 is a cross-sectional view along line C-C' in FIG. 5.

Referring to FIGS. 5 to 7, the first coil 1152a may be positioned on the first housing side portion 1121.

In addition, the first coil 1152a and the first magnet 1151a may be positioned to face each other. The first magnet 1151a may at least partially overlap the first coil 1152a in the second direction (Y-axis direction).

In addition, it may be positioned on the second housing side portion 1122 of the second coil 1152b. Therefore, the second coil 1152b and the second magnet 1151b may be positioned to face each other. The second magnet 1151b may at least partially overlap the second coil 1152b in the second direction (Y-axis direction).

In addition, the first coil 1152a and the second coil 1152b may overlap in the second direction (Y-axis direction), and the first magnet 1151a and the second magnet 1151b may overlap in the second direction (Y-axis direction). With this configuration, an electromagnetic force applied to the outer surface of the holder (the outer surface of the first holder and the outer surface of the second holder) may be positioned on a parallel axis in the second direction (Y-axis direction) and thus X-axis tilt may be accurately and precisely performed.

In addition, a first accommodating groove (not shown) may be positioned in an outer surface of the fourth holder. In addition, first protrusions PR1a and PR1b may be disposed in the first accommodating groove. Therefore, when the X-axis tilt is performed, the first protrusions PR1a and PR1b may serve as a reference axis (or rotational axis) of the tilt. Therefore, the rotational plate 1141 and the mover 1130 may move laterally.

The second protrusion PR2 may be seated in the groove of an inner surface of the fourth housing side portion 1124 as described above. In addition, when the Y-axis tilt is performed, the rotational plate and the mover may rotate using the second protrusion PR2 serving as the reference axis of the Y-axis tilt.

The OIS may be performed by the first protrusion and the second protrusion. Furthermore, as a modified example, the first protrusion and the second protrusion may be disposed on opposite surfaces with respect to a base. In other words, the first protrusion may be disposed on any one of a first surface and second surface of the base. In addition, the second protrusion may be disposed on the other one of the first surface and second surface of the base.

Referring to FIG. 6, the Y-axis tilt may be performed. In other words, the OIS may be implemented by the rotation in the first direction (X-axis direction).

The third magnet 1151c disposed under the holder 1131 may form an electromagnetic force with the third coil 1152c to tilt or rotate the mover 1130 in the first direction (X-axis direction).

Specifically, the rotational plate 1141 may be coupled to the first housing 1120 and the mover 1130 by the first magnetic substance 1142 in the first housing 1120 and the second magnetic substance 1143 in the mover 1130. In addition, the first protrusions PR1 may be spaced apart from each other in the first direction (X-axis direction) and supported by the first housing 1120.

In addition, the rotational plate 1141 may rotate or tilt using the second protrusion PR2 protruding toward the mover 1130 serving as the reference axis (or rotational axis). In other words, the rotational plate 1141 may perform the Y-axis tilt using the second protrusion PR2 serving as the reference axis.

For example, the OIS may be implemented while rotating (X1->X1b or X1a) the mover 1130 at a first angle θ1 in the X-axis direction by first electromagnetic forces F1A and F1B between the third magnet 1151c disposed in a third seating groove and the third coil 1152c disposed on a third substrate side portion. The first angle θ1 may be in the range of ±1° to ±3°. However, the present invention is not limited thereto.

Referring to FIG. 7, the X-axis tilt may be performed. In other words, the OIS may be implemented by the rotation in the second direction (Y-axis direction).

The OIS may be implemented as the mover 1130 tilts or rotates (or the X-axis tilt) in the Y-axis direction.

The first magnet 1151a and the second magnet 1151b disposed in the holder 1131 form an electromagnetic force with the first coil 1152a and the second coil 1152b, respectively, to rotate or tilt the rotational plate 1141 and the mover 1130 in the second direction (Y axial direction).

The rotational plate 1141 may rotate or tilt (X-axis tilt) in the second direction using the first protrusion PR1 serving as the reference axis (or rotational axis).

For example, the OIS may be implemented while rotating (Y1->Y1a or Y1b) the mover 1130 at a second angle θ2 in the Y-axis direction by second electromagnetic forces F2A and F2B between the first and second magnets 1151a and 1151b disposed in a first seating groove and the first and second coils 1152a and 1152b disposed on the side portions of the first and second boards. The second angle θ2 may be in the range of ±1° to ±3°. However, the present invention is not limited thereto.

As described above, the first actuator may control the rotational plate 1141 and the mover 1130 to be rotated by the electromagnetic forces between the driving magnets in the holder and the driving coils disposed in the housing in the first direction (X-axis direction) or the second direction (Y-axis direction), thereby minimizing the occurrence of the decentering or tilting phenomenon when the OIS is implemented and providing the best optical characteristics. In addition, as described above, the "Y-axis tilt" corresponds to the rotation or tilt in the first direction (X-axis direction) and the "X-axis tilt" corresponds to the rotation or tilt in the second direction (Y-axis direction).

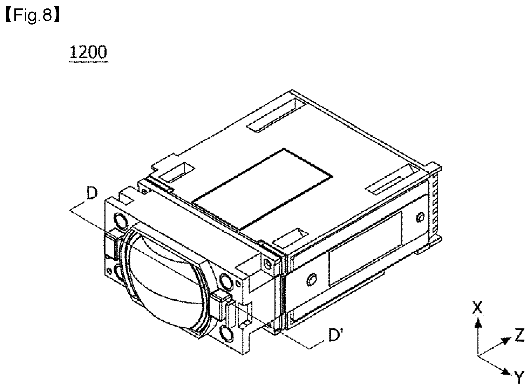

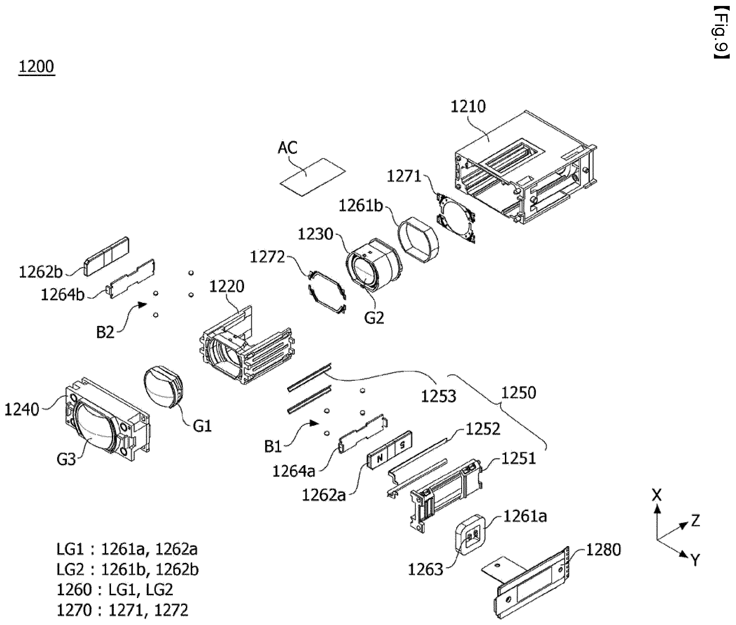

FIG. 8 is a perspective view of a second camera actuator according to a claimed embodiment, and FIG. 9 is an exploded perspective view of the second camera actuator according to the embodiment.

Referring to FIGS. 8 and 9, the second camera actuator 1200 includes a base 1210, a first lens assembly 1220, a second lens assembly 1230, a third lens assembly 1240, a guide part 1250, a driving part 1260, an elastic part 1270, and a second board part 1280.

In addition, as described above, the third direction (Z-axis direction) corresponds to the optical axis direction, and the second direction (Y-axis direction) corresponds to a direction from a second side wall to a first side wall and is perpendicular to the third direction (Z-axis direction). In addition, the first direction (X-axis direction) may be a direction perpendicular to the second direction (Y-axis direction) and the third direction (Z-axis direction).

In addition, the second camera actuator 1200 includes the base 1210 disposed on one side thereof, the first lens assembly 1220 disposed in the base 1210, the second lens assembly 1230 disposed in the first lens assembly 1220, the third lens assembly 1240 disposed at a front end or in front of the base 1210, the guide part 1250 disposed on a side surface (e.g., the first side wall) of the base 1210, the second driving part 1260 for moving the first lens assembly 1220 and the second lens assembly 1230, the elastic part 1270 for connecting the first lens assembly 1220 and the second lens assembly 1230 inside the first lens assembly 1220, and the second board part 1280 disposed on outer sides of the guide part 1250 and the base 1210 and electrically connected to the driving part 1260.

In addition, the second camera actuator 1200 includes a first lens group G1, a second lens group G2, and a third lens group G3, each of which is seated on a corresponding lens assembly. Each of the first lens group G1, the second lens group G2, and the third lens group G3 may be formed of a single lens or a plurality of lenses. Furthermore, the second camera actuator 1200 may further include an additional lens group (e.g., a fourth lens group) including a plurality of lenses or a single lens.

Hereinafter, detailed contents of the second camera actuator 1200 of the camera module according to the embodiment will be described with reference to the drawings.

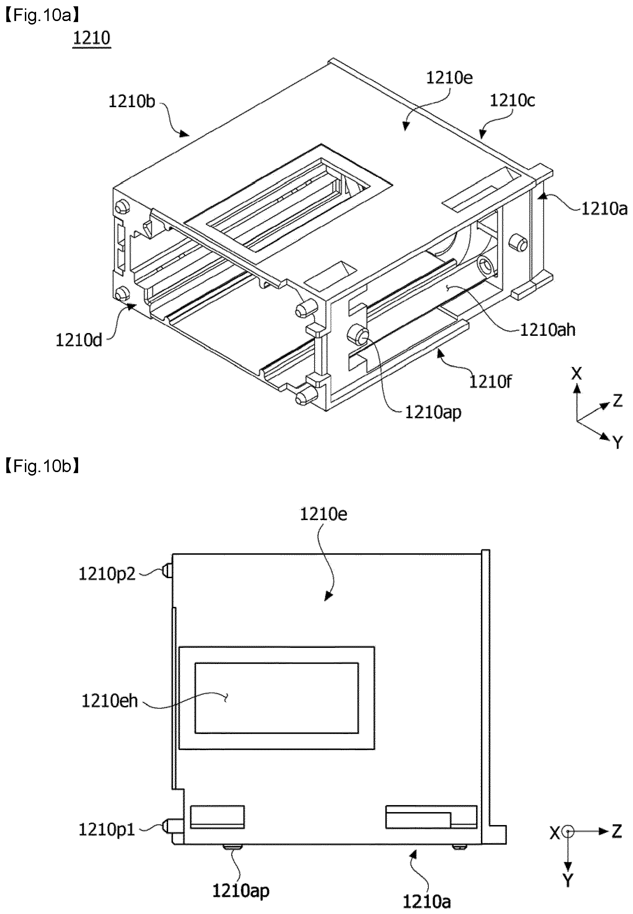

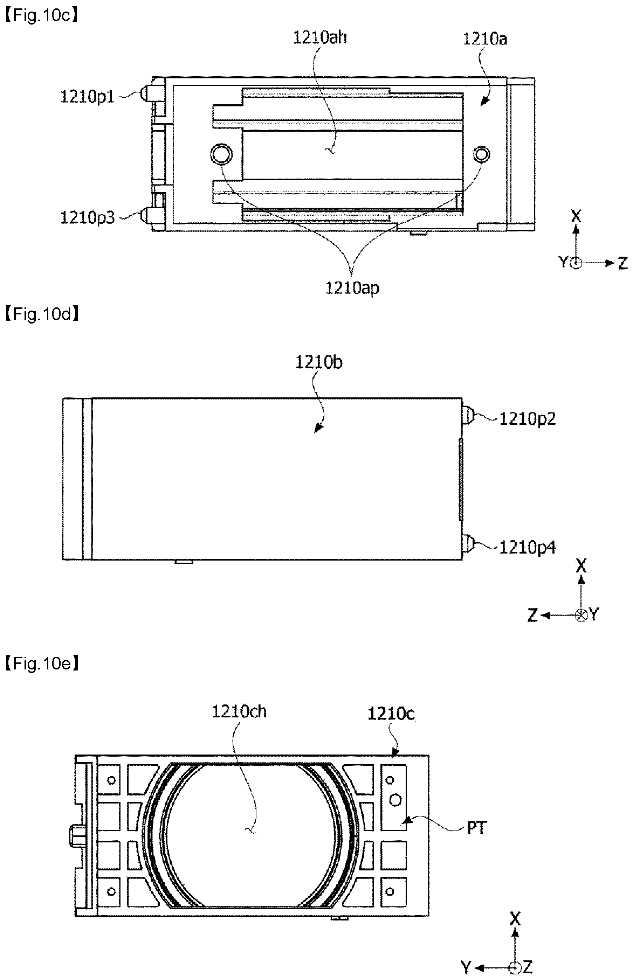

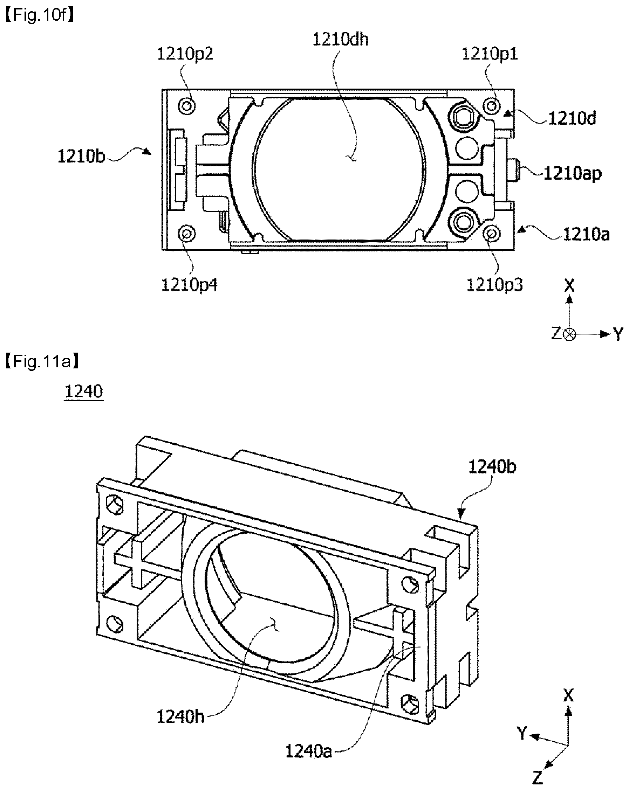

FIG. 10A is a perspective view of a base according to an embodiment, FIG. 10B is a top view of the base according to the embodiment, FIG. 10C is a view showing a first side wall of the base according to the embodiment, FIG. 10D is a view showing a second side wall of the base according to the embodiment, FIG. 10E is a rear view of the base according to the embodiment, and FIG. 10F is a front view of the base according to the embodiment.

First, as described above, the first lens assembly, the second lens assembly, and the guide part may be disposed in the base 1210 according to the embodiment. In addition, the third lens assembly may be disposed on one side surface of the base 1210.

Referring to FIGS. 10A to 10F, the base 1210 may have a rectangular parallelepiped shape having a space therein. In the embodiment, the base 1210 may include a first side wall 1210a, a second side wall 1210b, a third side wall 1210c, and a fourth side wall 1210d. In addition, the base 1210 may include the plurality of side walls described above, a base upper surface 1210e, and a base lower surface 1210f.

First, the base 1210 may include the first side wall 1210a and the second side wall 1210b corresponding to the first side wall 1210a. The second side wall 1210b may be positioned to face the first side wall 1210a. In the embodiment, the first side wall 1210a may be disposed symmetrically with the second side wall 1210b with respect to the third direction (Z-axis direction).

In addition, the base 1210 may further include the third side wall 1210c and the fourth side wall 1210d disposed to correspond to each other between the first side wall 1210a and the second side wall 1210b.

The third side wall 1210c and the fourth side wall 1210d may be disposed perpendicular to the first side wall 1210a and the second side wall 1210b.

In addition, the third side wall 1210c may be positioned to correspond to the fourth side wall 1210d. In the embodiment, the third side wall 1210c may be disposed symmetrically with the fourth side wall 1210d with respect to the second direction (Y-axis direction).

The first side wall 1210a, the second side wall 1210b, the third side wall 1210c, and the fourth side wall 1210d may be integrally formed in an injection mold shape or coupled to each other as separate components.

In addition, base protrusions 1210p1 to 1210p4 may be positioned on the fourth side wall 1210d of the base 1210. The base protrusions 1210p1 to 1210p4 may include a first base protrusion 1210p1, a second base protrusion 1210p2, a third base protrusion 1210p3, and a fourth base protrusion 1210p4, which are disposed on the fourth side wall 1210d.

The first base protrusion to the fourth base protrusion 1210p1, 1210p2, 1210p3, and 1210p4 may be coupled to a guide hole of the guide part and a coupling hole of the third lens assembly, which will be described below. Therefore, the base 1210, the guide part, and the third lens assembly may be coupled to each other.

In addition, the fourth side wall 1210d may have an open shape and include a first opening 1210dh. The first lens assembly 1220 and the second lens assembly 1230 may be attached to or detached from an inner side of the base 1210 through the first opening 1210dh.

In addition, the base 1210 may include a side wall hole 1210ah positioned in the first side wall 1210a. In the embodiment, the side wall hole 1210ah may be positioned in at least one of the first side wall 1210a and the second side wall 1210b of the base 1210. A fourth coil to be described below may be seated in the side wall hole 1210ah.

In addition, the base 1210 may include a base protrusion 1210ap protruding from the first side wall 1210a in the second direction (Y-axis direction). The base protrusion 1210ap may be coupled to a hole formed in the second board part to be described below to improve a coupling force between the base 1210 and the second board part.

In addition, the base 1210 may include the base upper surface 1210e and the base lower surface 1210f. The base upper surface 1210e may include a base upper hole 1210eh. In the embodiment, a base cover AC (see FIG. 9) for blocking light incident on the first lens group in the first lens assembly or the second lens group in the second lens assembly may be easily seated on the base upper surface 1210e through the base upper hole 1210eh. Furthermore, a thickness of the first lens group or the second lens group can be improved by the base upper hole 1210eh, thereby improving the optical characteristics by the second camera actuator. Therefore, the first lens group or the second lens group may have a D-cut shape, and thus provide improved optical characteristics with the same diameter.

In addition, the third side wall 1210c may include a second opening 1210ch. Light passing through the first lens group and the second lens group may pass through the second opening 1210ch and may be incident on an image sensor on a circuit board positioned at the rear end of the second camera actuator. Alternatively, the light passing through the first lens group and the second lens group may pass through the second opening 1210ch and may be incident on an image sensor positioned in the second camera actuator. In the specification, the former will be described.

A pattern groove PT formed of a plurality of grooves may be positioned in the third side wall 1210c. The pattern groove PT may be positioned around the second opening 1210ch. Therefore, the base 1210 may include the pattern groove PT positioned in the third side wall 1210c.

The base 1210 according to the embodiment may reduce a weight of the base 1210 through the pattern groove PT. In addition, since an epoxy or adhesive is applied on the pattern groove PT, a coupling force between the third side wall 1210c and the circuit board at the rear end of the second camera actuator can be improved.

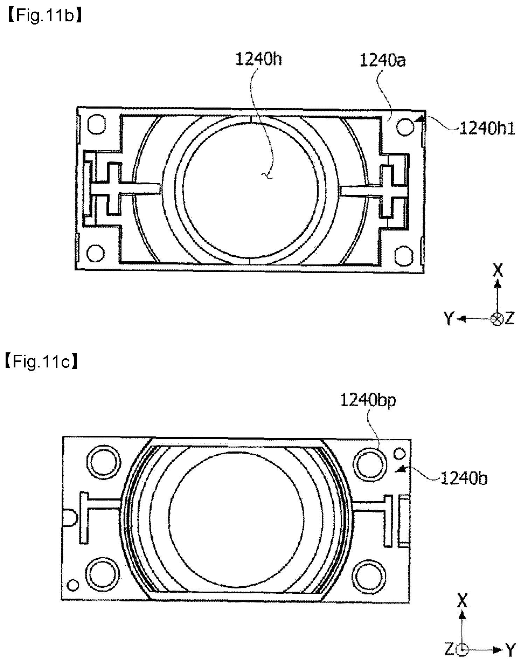

FIG. 11A is a perspective view of a third lens assembly according to the embodiment, FIG. 11B is a rear view of the third lens assembly according to the embodiment, and FIG. 11C is a front view of the third lens assembly according to the embodiment.

Referring to FIGS. 11A to 11C, the third lens assembly 1240 according to the embodiment may be positioned at the front end or in front of the base as described above and coupled to the base.

First, the third lens assembly 1240 may include a third lens hole 1240h positioned therein. The third lens hole 1240h may be positioned at the center of the third lens assembly 1240. In addition, the third lens hole 1240h may have a circular shape. The third lens group may be seated in the third lens hole 1240h. The third lens group may be formed of a plurality of lenses or a single lens.

The third lens hole 1240h may at least partially overlap a first lens hole of the first lens assembly and a second lens hole of the second lens assembly to be described below in the third direction (Z-axis direction). Therefore, light reflected from the first camera actuator described above may pass through the first lens group to the third lens group and may be incident on the image sensor.

The third lens assembly 1240 may include a bottom surface 1240a and a top surface 1240b. The bottom surface 1240a of the third lens assembly 1240 may be in contact with the fourth side wall of the base described above.

Specifically, the third lens assembly 1240 may include a bottom hole 1240h1 positioned in the bottom surface 1240a. A plurality of bottom holes 1240h1 may be provided and positioned outside the third lens hole 1240h. For example, four bottom holes 1240h1 may be provided. **In** addition, the bottom hole 1240h1 may be positioned adjacent to each corner of the bottom surface 1240a of the third lens assembly 1240.

**In** addition, the third lens assembly 1240 may be coupled to the base through the base protrusion 1210p1. **In** the embodiment, the base protrusion of the base may pass through the bottom hole 1240h1 from the bottom surface 1240a of the third lens assembly 1240. Therefore, the base and the third lens assembly may be coupled to each other.

The top surface 1240b of the third lens assembly 1240 may be positioned to correspond to the bottom surface 1240a. **In** the embodiment, the top surface 1240b of the third lens assembly 1240 may be positioned to face the bottom surface 1240a. **In** addition, the top surface 1240b of the third lens assembly 1240 may be disposed symmetrically with the bottom surface 1240a with respect to the first direction (X-axis direction) or the second direction (Y-axis direction).

**In** addition, the top surface 1240b of the third lens assembly 1240 may be in contact with the first camera actuator described above. For example, an adhesive member such as epoxy for coupling with the first camera actuator may be applied on the top surface 1240b of the third lens assembly 1240. **In** addition, the top surface 1240b of the third lens assembly 1240 may have various coupling structures (e.g., protrusions 1240bp) for coupling with the first camera actuator.

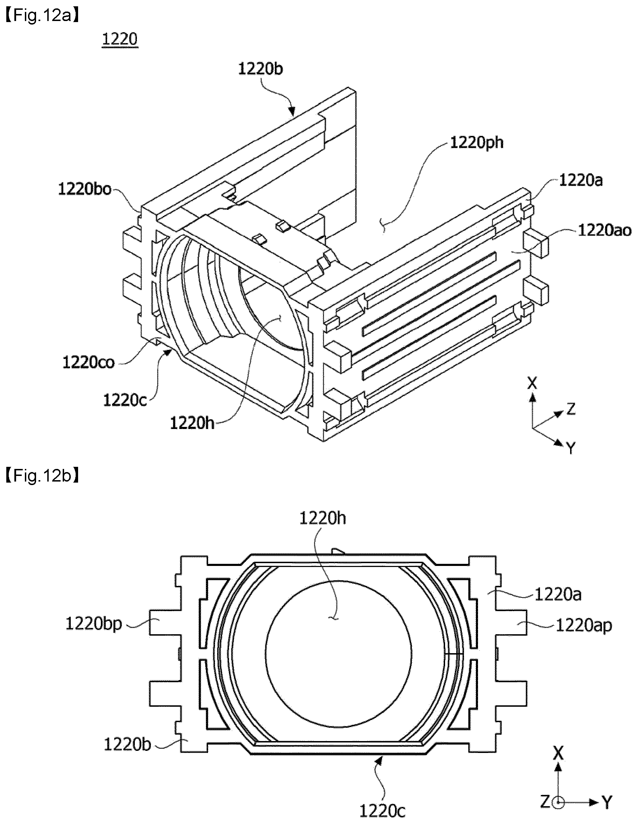

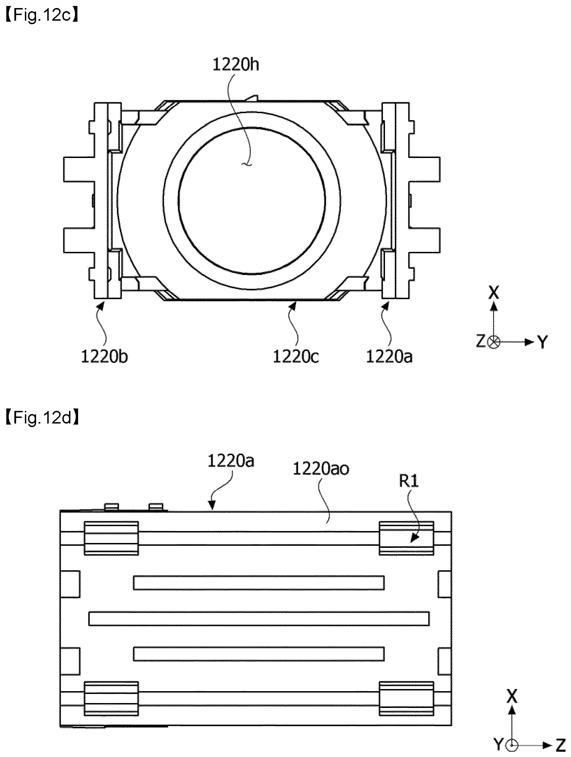

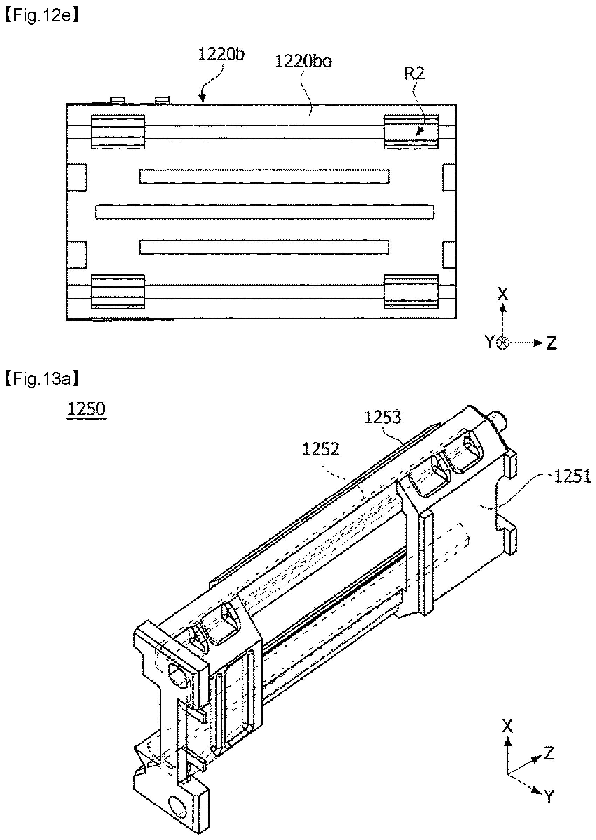

FIG. 12A is a perspective view of a first lens assembly according to the embodiment, FIG. 12B is a front view of the first lens assembly according to the embodiment, FIG. 12C is a rear view of the first lens assembly according to the embodiment, FIG. 12D is a view showing a first lens side surface of the first lens assembly according to the embodiment, and FIG. 12E is a view showing a second lens side surface of the first lens assembly according to the embodiment.

Referring to FIG. 12A, the first lens assembly 1220 may move along the guide part in the third direction (Z-axis direction).

The first lens assembly 1220 may include a first lens side portion 1220a, a second lens side portion 1220b, and a third lens side portion 1220c.

The first lens side portion 1220a may be positioned to correspond to the second lens side portion 1220b. The first lens side portion 1220a may be positioned symmetrically with the second lens side portion 1220b with respect to the third direction (Z-axis direction). In addition, the first lens side portion 1220a and the second lens side portion 1220b of the first lens assembly 1220 may be positioned to face each other.

In addition, the third lens side portion 1220c may be positioned between the first lens side portion 1220a and the second lens side portion 1220b. The third lens side portion 1220c may vertically contact the first lens side portion 1220a and the second lens side portion 1220b. In addition, the third lens side portion 1220c may be positioned at a front end or a rear end between the first lens side portion 1220a and the second lens side portion 1220b. The third lens side portion 1220c positioned at the front end will be described.

The first lens assembly 1220 may include a lens accommodating part 1220ph. The lens accommodating part 1220ph may be surrounded by the first lens side portion 1220a to the third lens side portion 1220c. Alternatively, the lens accommodating part 1220ph may be positioned behind the third lens side portion 1220c between the first lens side portion 1220a and the second lens side portion 1220b. Alternatively, the lens accommodating part 1220ph may overlap the first lens side portion 1220a and the second lens side portion 1220b in the second direction (Y-axis direction) and overlap the third lens side portion 1220c in the third direction (Z-axis). The second lens assembly, the second lens group, and the elastic part may be positioned in the lens accommodating part 1220ph.

In addition, the third lens side portion 1220c may include a first lens hole 1220h. The first lens group may be seated in the first lens hole 1220h. The first lens group may be formed of a plurality of lenses or a single lens. The first lens group may move in response to the movement of the first lens assembly because the first lens group is coupled to the first lens assembly. For example, the first lens group may move with the first lens assembly in the optical axis or the third direction (Z-axis direction). Therefore, a distance between the first lens group and the subject or a distance between the first lens group and an image is greatly changed, and thus the magnification may be changed or the focal length may be adjusted.

The first lens assembly 1220 may be positioned in the base 1210 described above and coupled to the base 1210. In this case, the first lens side portion 1220a and the second lens side portion 1220b of the first lens assembly 1220 may be coupled to the base to be movable relative to the base.

Referring to FIGS. 12B and 12C, the first lens side portion 1220a may include a first assembly protrusion 1220ap protruding outward. In addition, the second lens side portion 1220b may include a second assembly protrusion 1220bp protruding outward. In the specification, the inner side may face the light path, and the outer side may be opposite to the inner side.

The first assembly protrusion 1220ap and the second assembly protrusion 1220bp may be seated on an inner surface of the base. The movement of the first lens assembly 1220 and the base in the second direction (Y-axis direction) may be blocked by the first assembly protrusion 1220ap and the second assembly protrusion 1220bp, and the first lens assembly 1220 and the base may be coupled to each other.

Referring to FIGS. 12D and 12E, the first lens side portion 1220a may include a first recess R1 positioned on an outer surface 1220ao. The first recess R1 may be positioned on the outer surface 1220ao of the first lens side portion 1220a, and at least one first recess R1 may be provided. The number of first recesses R1 may correspond to the number of first balls. The outer surface 1220ao of the first lens side portion 1220a may be used interchangeably with a "first lens side surface." Alternatively, the first lens side surface may correspond to an upper side portion of the first lens assembly.

In addition, in the specification, four first recesses R1 will be described. Two first recesses R1 may be positioned in each of an upper region and a lower region of the outer surface 1220ao of the first lens side portion 1220a. In the upper region of the outer surface 1220ao of the first lens side portion 1220a, two first recesses R1 may overlap each other in the third direction (Z-axis direction). In addition, in the lower region of the outer surface 1220ao of the first lens side portion 1220a, two first recesses R1 may overlap each other in the third direction (Z-axis direction).

In addition, the first recesses R1 may overlap each other in the first direction (X-axis direction) on the outer surface 1220ao of the first lens side portion 1220a. In other words, the plurality of first recesses R1 may overlap each other in the first direction (X-axis direction) or in the third direction (Z-axis direction). Therefore, even when the first ball is seated in the first recess R1 and the first lens assembly is moved by the rotation of the first ball, a force may be uniformly applied to the first lens assembly. Therefore, it is possible to improve the reliability of the first lens assembly. In addition, the first lens assembly may be accurately moved.

The second lens side portion 1220b may include a second recess R2 positioned on an outer surface 1220bo. The second recess R2 is positioned in the outer surface 1220bo of the second lens side portion 1220b, and at least one second recess R2 may be provided. The number of second recesses R2 may correspond to the number of second balls. In addition, the outer surface 1220bo of the second lens side portion 1220b may be used interchangeably with a "second lens side surface." In addition, the second lens side surface may correspond to a lower side portion of the first lens assembly.

In the specification, four second recesses R2 will be described. Two second recesses R2 may be positioned in each of an upper region and a lower region of the outer surface 1220bo of the second lens side portion 1220b. In the upper region of the outer surface 1220bo of the second lens side portion 1220b, two second recesses R2 may overlap each other in the third direction (Z-axis direction). In addition, in the lower region of the outer surface 1220bo of the second lens side portion 1220b, two second recesses R2 may overlap each other in the third direction (Z-axis direction).

In addition, the second recesses R2 may overlap each other in the second direction (X-axis direction) on the outer surface 1220bo of the second lens side portion 1220b.

Furthermore, the second recess R2 may be positioned to correspond to the first recess R1. Therefore, the second recess R2 and the first recess R1 may be positioned to overlap each other in the second direction (Y-axis direction). Therefore, a force may be uniformly applied to the first lens assembly 1220 by the first ball and the second ball.

In addition, the plurality of second recesses R2 may overlap each other in the second direction (X-axis direction) or the third direction (Z-axis direction). Therefore, even when the second ball is seated in the second recess R2 and the second lens assembly is moved by the rotation of the second ball, a force may be uniformly applied to the second lens assembly. Therefore, it is possible to improve the reliability of the second lens assembly. In addition, the second lens assembly may be accurately moved.

Furthermore, grooves may be formed in the outer surface 1220ao of the first lens side portion 1220a and the outer surface 1220bo of the second lens side portion 1220b. In addition, the weight of the first lens assembly may be reduced by the groove described above, and an epoxy or the like is applied on the groove, and thus coupling with a first yoke or a second yoke to be described below can be easily implemented.

In addition, a second connecting member extending in the third direction (Z-axis direction) may be positioned in the first recess R1 of the first lens side portion 1220a. Therefore, the second connecting member may be exposed by the first recess R1 and may come into contact with the first ball seated in the first recess R1. In addition, the second connecting member may be disposed between the first recess and the first ball. A detailed description will be given below.

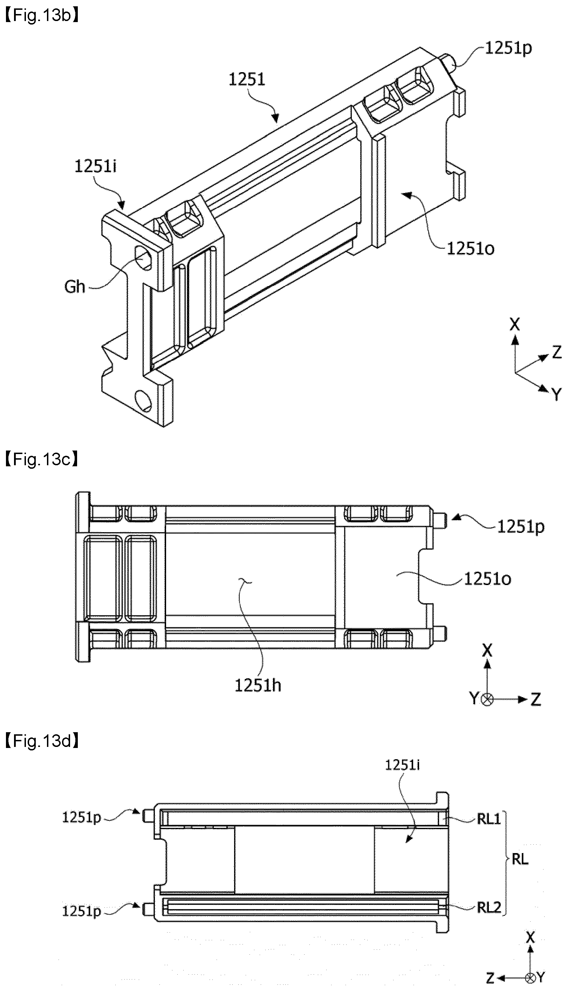

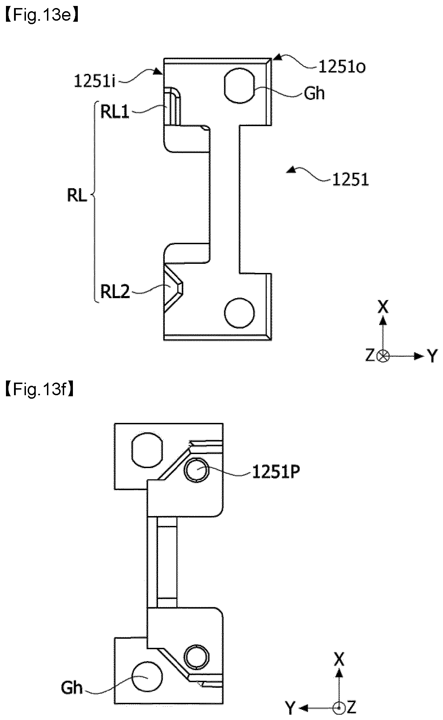

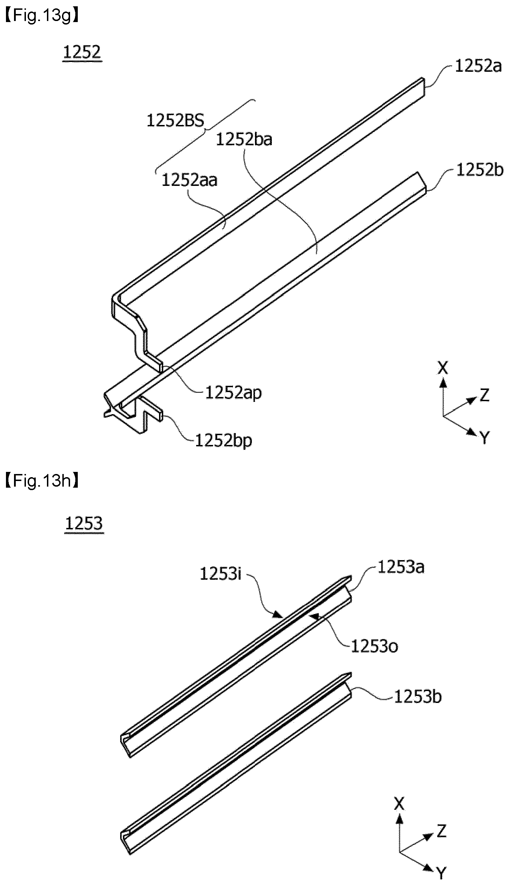

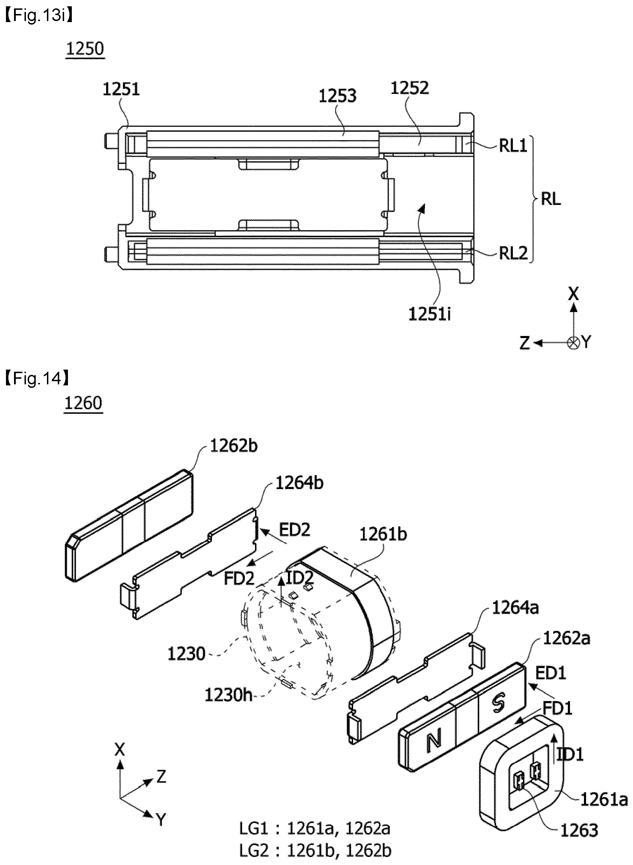

FIG. 13A is a perspective view of a guide part according to an embodiment, FIG. 13B is a perspective view of a body of the guide part according to the embodiment, FIG. 13C is a view showing an outer surface of the body of the guide part according to the embodiment, FIG. 13D is a view showing an inner surface of the body of the guide part according to the embodiment, FIG. 13E is a front view of the body of the guide part according to the embodiment, FIG. 13F is a rear view of the body of the guide part according to the embodiment, FIG. 13G is a perspective view of a first connecting member of the guide part according to the embodiment, FIG. 13H is a perspective view of a second connecting member of the guide part according to the embodiment, and FIG. 13I is a view showing an inner side of the guide part according to the embodiment.

Referring to FIG. 13A, the first lens assembly and the second lens assembly may move along the guide part 1250.

The guide part 1250 may include a body 1251 including a rail, a first connecting member 1252 positioned on the rail, and a second connecting member 1253 disposed on the first lens side portion.

The guide part 1250 may be positioned adjacent to at least one of the first side wall and the second side wall of the base. Hereinafter, the guide part 1250 positioned adjacent to the first side wall of the base will be described.

The guide part 1250 may be positioned between the first lens assembly and the base. In other words, the guide part 1250 may be positioned inside the base and outside the first lens assembly. The guide part 1250 may be positioned between the first side wall of the base and the first lens side portion of the first lens assembly. Therefore, an inner surface of the second side wall of the base may come into contact with the second ball. In addition, the first lens assembly may be moved by the rotation of the second ball in the third direction (Z-axis direction) within the base.

In addition, the body 1251 may include a guide hole Gh (see FIG. 13B) and may be coupled to the base through the guide hole Gh. As described above, the base protrusion may pass through the guide hole.

In addition, the body 1251 may include a single rail or a plurality of rails. The rail may include a first rail positioned on an upper portion thereof and a second rail positioned on a lower portion thereof. In addition, the first ball may be positioned on the first rail and the second rail. The first rail and the second rail may extend in the third direction (Z-axis direction). For example, the first rail and the second rail may be positioned parallel to the third direction (Z-axis direction). With the configuration, the first lens assembly may be moved by the rotation of the first ball in the third direction (Z-axis direction) within the base.

The first connecting member 1252 may be positioned on the first rail and the second rail. For example, a single first connecting member 1252 or a plurality of first connecting members 1252 may be provided to correspond to the number or positions of the rails of the body 1251. In addition, the first connecting member 1252 may come into contact with the first ball on the first rail and the second rail.

The first connecting member 1252 may be made of a conductive material. Furthermore, the first ball may also be made of a conductive material, and the second connecting member may also be made of a conductive material. Therefore, the first connecting member 1252, the first ball, and the second connecting member 1253 may be electrically connected.

The second connecting member 1253 may be positioned to correspond to the first rail and the second rail. In addition, the second connecting member 1253 may be positioned to correspond to the first connecting member 1252, and a single second connecting member 1253 or a plurality of second connecting members 1253 may be provided.

The second connecting member 1253 may be positioned on the first lens side portion of the first lens assembly described above. More specifically, the second connecting member 1253 may be positioned to be exposed by the first recess of the first lens side portion. In other words, the second connecting member 1253 may be positioned in the first recess to be exposed by the first recess. Therefore, the second connecting member 1253 may come into contact with the first ball.

In addition, the second connecting member 1253 may further include a region exposed in a region other than the first recess. For example, the second connecting member 1253 may be partially exposed at the rear end thereof. Therefore, the second connecting member 1253 may be electrically connected to a first elastic part to be described below.

Referring to FIGS. 13B to 13F, the body 1251 may be disposed between the first lens assembly 1220 and the first side wall of the base 1210.

According to the embodiment, as the lens assembly is driven in a state in which the body 1251 precisely numerically controlled in the base has been coupled to the base, technical effects which can improve a driving force upon zooming, reduce power consumption, and improve control characteristics may be present by reducing a frictional torque to reduce a frictional resistance.

Therefore, according to the embodiment, there may be present complex technical effects which can prevent the occurrence of a phenomenon such as lens decentering, lens tilting, or misalignment between central axes of the lens group and the image sensor even while minimizing the frictional torque upon zooming, and thus significantly improve image quality or resolution.

The body 1251 may include a single rail RL or a plurality of rails RL. In the embodiment, the plurality of rails RL may include a first rail RL1 and a second rail RL2. The first rail RL1 may be positioned above the second rail RL2. In other words, since the body 1251 has two rails, even when one rail is misaligned, accuracy can be easily secured by the other rail.

In addition, the first rail RL1 and the second rail RL2 may have the same shape or different shapes. For example, the shape of the first rail RL1 may be a V-shape. In addition, the shape of the second rail RL2 may be an L-shape but the present invention is not limited thereto.

Furthermore, the rail positioned on the second side wall of the base may also have a V-shape or an L-shape as described above. In addition, the rail positioned on the second side wall of the base may have the same shape as the first rail and the second rail in a diagonal direction. Alternatively, corresponding rails in the second direction may have the same shape. With the configuration, even when there is an issue (e.g., damage) of the friction force of the ball on any one rail, the driving force can be easily secured as a rolling operation is smoothly performed on the other rail.

In addition, the second camera actuator and the camera module including the same according to the embodiment can solve the problem of lens decentering or tilting while zooming so that alignment and intervals between the plurality of lens groups are well set to prevent a change in angle of view or the occurrence of out-of-focus, thereby significantly improving image quality or resolution.

In addition, since the body 1251 includes the first rail RL1 and the second rail RL2 and the first rail RL1 and the second rail RL2 guide the first lens assembly 1220, it is possible to improve the accuracy of the alignment.

In addition, since the second camera actuator has two rails for the first lens assembly, it is possible to secure a wide interval between the balls, thereby improving the driving force.

In addition, the body 1251 may include a guide protrusion 1251p extending in a lateral direction perpendicular to a direction in which the first rail RL1 extends.

A plurality of guide protrusions 1251p may be provided. The guide protrusion 1251p may be seated in a groove positioned in the third side wall of the base. Therefore, the body 1251 may be easily coupled to the base.

Furthermore, the body 1251 may be easily coupled to the base through the guide hole Gh. In other words, since the base protrusion positioned on the fourth side wall of the base passes through the guide hole Gh, it is possible to further improve the coupling force between the base and the guide.

An outer surface 1251o of the body 1251 may be in contact with the board part. In addition, the body 1251 may include a body hole 1251h positioned in the outer surface 1251o of the body 1251. The fourth coil may be positioned in the body hole 1251h. The fourth coil may generate an electrical interaction with the facing fourth magnet and finally move the first lens assembly in the third direction (Z-axis direction) by an electromagnetic force.

The first rail RL1 and the second rail RL2 described above may be positioned on an inner surface 1251i of the body 1251.

In addition, the first connecting member may be seated on the inner surface 1251i of the body 1251. As described above, the first connecting member may be positioned on the inner surface 1251i of the body 1251, particularly, on the first rail RL1 and the second rail RL2. Therefore, the first connecting member may be positioned between the first ball and the body 1251 and may come into contact with the first ball to be electrically connected to the first ball.

Referring to FIG. 13G, a single first connecting member 1252 or a plurality of first connecting members 1252 may be provided. The first connecting member 1252 may include a 1-1 connecting member 1252a and a 1-2 connecting member 1252b.

In addition, the first connecting member 1252 may include a base member 1252BS and an extension 1252P. The base member 1252BS may extend in the third direction (Z-axis direction). The base member 1252BS may be positioned on the rail.

The 1-1 connecting member 1252a may include a first base member 1252aa, and the 1-2 connecting member 1252b may include a second base member 1252ba. In addition, the base member 1252BS may include the first base member 1252aa and the second base member 1252ba.

In addition, the extension 1252P may extend outward from one end of the base member 1252BS. The extension 1252P may extend to the outside of the body. In other words, the extension 1252P may extend in the second direction (Y-axis direction) from one end of the base member 1252BS. With the configuration, the first connecting member coming into contact with the first ball may be easily electrically connected to the second board part outside the body.

The extension 1252P may include a first extension portion 1252ap and a second extension portion 1252bp. In addition, the 1-1 connecting member 1252a may include the first extension portion 1252ap, and the 1-2 connecting member 1252b may include the second extension portion 1252bp.

In addition, the extension 1252P may extend in the second direction (the Y-axis direction) and may be bent. Therefore, the extension 1252P may extend toward the adjacent first connecting member in some regions.

Referring to FIG. 13H, the second connecting member 1253 according to the embodiment may extend in the third direction (Z-axis direction). As described above, the second connecting member 1253 may be positioned on the first lens side portion of the first lens assembly.

In addition, the second connecting member 1253 may be partially exposed by the first recess and may further have an additional exposed region at the rear end thereof. Therefore, an outer surface 1253o of the second connecting member 1253 may be exposed by the first recess and may come into contact with the first ball seated in the first recess to be electrically connected to the first ball. In addition, an inner surface 1253i of the second connecting member 1253 may be positioned in the first lens side portion of the first lens assembly and partially exposed. In the embodiment, the inner surface 1253i of the second connecting member 1253 may be exposed at the rear end thereof. The inner surface 1253i of the second connecting member 1253 may be electrically connected to the elastic part to be described below. Therefore, the second connecting member 1253 may be electrically connected to the first ball through the outer surface 1253o and electrically connected to the elastic part through the inner surface 1253i.

A single second connecting member 1253 or a plurality of second connecting members 1253 may be provided. The number of second connecting members 1253 may correspond to the number of rails or the number of first connecting members. The second connecting member 1253 may include a 2-1 connecting member 1253a and a 2-2 connecting member 1253b.

The 2-1 connecting member 1253a may be positioned to correspond to the 1-1 connecting member 1252a and electrically connected thereto. In addition, the 2-2 connecting member 1253b may be positioned to correspond to the 1-2 connecting member 1252b and electrically connected thereto.

Referring to FIG. 13I, the first connecting member 1252 may be positioned on the rail RL positioned on the inner surface 1251i of the body 1251 of the guide part 1250 according to the embodiment. The first connecting member 1252 may at least partially overlap the rail RL in the second direction (Y-axis direction).

In addition, the first connecting member 1252 and the second connecting member 1253 may extend in the third direction (Z-axis direction). In addition, the second connecting member 1253 may be positioned on the rail RL and the first connecting member 1252.

A length of the second connecting member 1253 in the third direction (Z-axis direction) may be greater than a length of the first connecting member 1252 in the third direction (Z-axis direction). Therefore, a magnification may be changed by moving the second connecting member 1253 seated on the first lens assembly in the third direction (Z-axis direction) on the first connecting member 1252 or on the rail RL.

FIG. 14 is a perspective view of the second driving part and the second lens assembly according to the embodiment.

Referring to FIG. 14, the driving part 1260 according to the embodiment includes a first lens driving part LG1, a second lens driving part LG2, a third Hall sensor 1263, a first yoke 1264a, and a second yoke 1264b. The second driving part 1260 according to the embodiment moves the first lens assembly and the second lens assembly in the third direction (Z-axis direction).

The first lens driving part LG1 includes a fourth coil 1261a and a fourth magnet 1262a. The fourth coil 1261a is positioned in the guide part as described above. In addition, the fourth coil 1261a may be electrically connected to the adjacent second board part 1280.

The fourth magnet 1262a is positioned to face the fourth coil 1261a. Therefore, the first lens assembly may be moved by electromagnetic interaction between the fourth coil 1261a and the fourth magnet 1262a.

The fourth magnet 1262a may be seated on the first lens side portion of the first lens assembly. In this case, the first yoke 1264a may be seated on the first lens side portion of the first lens assembly and coupled to the first lens side portion. More specifically, the first yoke 1264a may be seated on the first lens side surface. In addition, the first yoke 1264a may be coupled to the fourth magnet 1262a by a magnetic force or the like. Therefore, the fourth magnet 1262a may be coupled to the first lens assembly and moved by a current flowing through the fourth coil 1261a.

More specifically, a current ID1 may flow through the fourth coil 1261a in the first direction (X-axis direction). In addition, the magnetic force ED1 may be applied to the fourth coil 1261a by the fourth magnet 1262a in a direction opposite to the second direction (Y-axis direction). Therefore, the electromagnetic force may be applied to the fourth coil 1261a in a direction opposite to the third direction (Z-axis direction). Therefore, the first lens assembly on which the fourth magnet 1262a is seated may move in the third direction through the rotation of the first ball and the second ball.

In other words, the first lens driving part LG1 may move the first lens assembly in the third direction (Z-axis direction). In addition, since the second lens assembly is positioned in the first lens assembly, the second lens assembly may move together with the first lens assembly in the third direction (Z-axis direction). Therefore, the first lens driving part may move the first lens assembly and the second lens assembly by the same distance.

The second lens driving part LG2 includes a fifth coil 1261b and a fifth magnet 1262b. The fifth coil 1261b is positioned on an outer surface of the second lens assembly 1230. The fifth coil 1261b surround the second lens assembly.

In addition, the second lens assembly 1230 may include a second lens hole 1230h. The second lens group may be seated in the second lens hole 1230h. The second lens group may be formed of at least one lens. In addition, as the second lens assembly 1230 moves, the second lens group may also move. Therefore, the second camera actuator according to the embodiment may perform focusing and a magnification change.

In addition, the fifth coil 1261b may be electrically connected to the second connecting member described above. Specifically, the fifth coil 1261b may be electrically connected to an elastic part adjacent to the fifth coil 1261b. In addition, a first elastic member of the elastic part may be in contact with the second connecting member and may be electrically connected thereto. In addition, the second connecting member may be electrically connected to the second board part through the first ball and the first connecting member. Therefore, a current may be applied from the second board part to the fifth coil 1261b, and the amount of current may also be controlled.

The fifth magnet 1262b is positioned adjacent to the fifth coil 1261b. The fifth magnet 1262b is positioned to correspond to the fourth magnet 1262a. In other words, the fifth magnet 1262b may be positioned symmetrically with the fourth magnet 1262a with respect to the third direction (Z-axis direction). Therefore, forces received by weights of the fourth magnet 1262a and the fifth magnet 1262b in the first lens assembly may be uniform.

Alternatively, the fifth coil 1261b may be positioned to be misaligned with the fourth coil 1261a. For example, the fifth coil 1261b may be positioned perpendicular to the fourth coil 1261a. In addition, the fifth coil 1261b is positioned between the fourth magnet 1262a and the fifth magnet 1262b. In addition, the fifth coil 1261b may be positioned inward from the fourth coil 1261a.

The second lens assembly may be moved by electromagnetic interaction between the fifth coil 1261b and the fifth magnet 1262b.

The fifth magnet 1262b may be seated on the second lens side portion of the first lens assembly. In this case, the second yoke 1264b may be seated on the second lens side portion of the first lens assembly and coupled to the second lens side portion. In addition, the second yoke 1264b may be coupled to the fifth magnet 1262b by a magnetic force or the like. Therefore, the fifth magnet 1262b may be coupled to the first lens assembly and moved by the first lens driving part, and the second lens assembly may be moved by the current flowing through the fifth coil 1261b and the magnetic force of the fifth magnet 1262b.

More specifically, a current ID2 may flow through the fifth coil 1261b in the first direction (X-axis direction). In addition, a magnetic force ED2 may be applied to the fifth coil 1261b in a direction opposite to the second direction (Y-axis direction) by the fifth magnet 1262b. Therefore, the electromagnetic force may be applied to the fifth coil 1261b in a direction opposite to the third direction (Z-axis direction). Therefore, the second lens assembly coupled to the fifth coil 1261b may move in the third direction (Z-axis direction) with respect to the first lens assembly in a state of being coupled to the first lens assembly by the elastic part.

In other words, the second lens driving part LG2 may move the second lens assembly in the third direction (Z-axis direction). Therefore, the second lens driving part moves only the second lens assembly other than the first lens assembly.

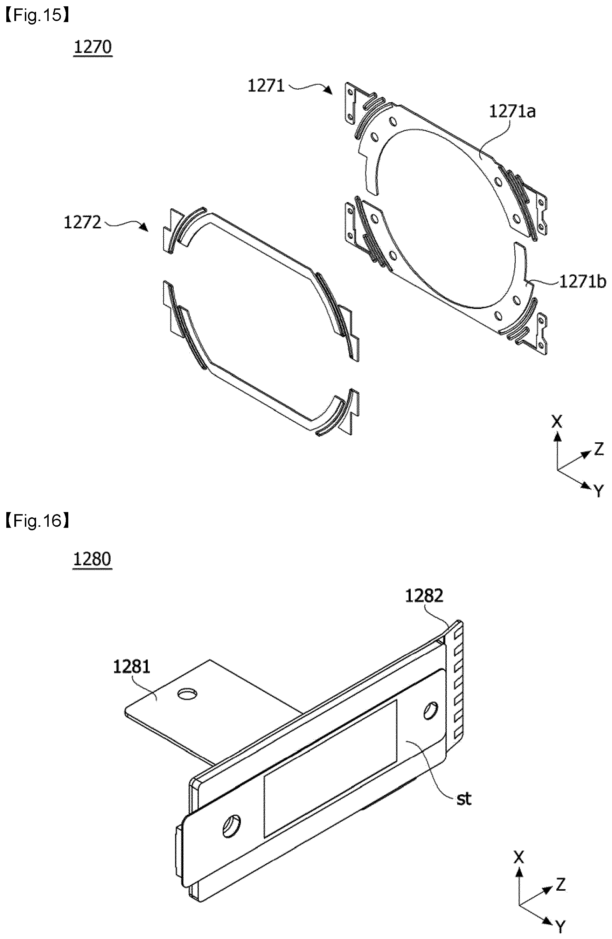

FIG. 15 is a perspective view of an elastic part.

Referring to FIG. 15, the elastic part 1270 may include a first elastic member 1271 and a second elastic member 1272.

The first elastic member 1271 may be positioned below the second lens assembly. In addition, the second elastic member 1272 may be positioned above the second lens assembly.

The first elastic member 1271 and the second elastic member 1272 may be coupled to the second lens assembly and the first lens assembly, respectively. Therefore, the first elastic member 1271 and the second elastic member 1272 may provide an elastic force required for the second lens assembly to move with respect to the first lens assembly in the first lens assembly.

In addition, the first elastic member 1271 may be made of a conductive material. The first elastic member 1271 may include a 1-1 elastic region 1271a and a 1-2 elastic region 1271b. The 1-1 elastic region 1271a and the 1-2 elastic region 1271b may be electrically separated from each other. The 1-1 elastic region 1271a may be positioned above the 1-2 elastic region 1271b. In other words, the 1-2 elastic region 1271b may be positioned below the 1-1 elastic region 1271a.

Therefore, the 1-1 elastic region 1271a may be in contact with the 2-1 connecting member disposed thereon and may be electrically connected thereto. In addition, the 1-2 elastic region 1271b may be in contact with the 2-2 connecting member disposed thereunder and may be electrically connected thereto.

In addition, the 1-1 elastic region 1271a and the 1-2 elastic region 1271b may be electrically connected to the fifth coil. In addition, pieces of power having different polarities may be applied to the 1-1 elastic region 1271a and the 1-2 elastic region 1271b.

In addition, the 1-1 elastic region 1271a and the 1-2 elastic region 1271b may be symmetrically disposed with respect to the second direction (Y-axis direction). Therefore, the elastic force is uniformly provided to the second lens assembly, and thus the second lens assembly can be accurately moved.

In addition, the second elastic member 1272 may be divided into two regions like the first elastic member 1271. In addition, as a modified example, like the first elastic member, the second elastic member 1272 may be electrically connected to the coil and electrically connected to the second connecting member to apply a current to the fifth coil.

FIG. 16 is a perspective view of the second board part

Referring to FIG. 16, the second board part 1280 may include a 2-1 board part 1281 and a 2-2 board part 1282. The 2-1 board part 1281 may be positioned below the base and coupled to the base.

In addition, the 2-2 board part 1282 may be positioned on a side portion of the base. In particular, the 2-2 board part 1282 may be positioned on the first side wall of the base. Therefore, the 2-2 board part 1282 may be positioned adjacent to the fourth coil positioned adjacent to the first side wall and thus easily electrically connected thereto.

Furthermore, the second board part 1280 may further include a fixed substrate st positioned thereunder. Therefore, even when the second board part 1280 is made of a flexible material, the second board part 1280 may be coupled to the base while maintaining stiffness by the fixed substrate st.

The second board part 1280 may be positioned on a side portion of the guide part 1250. The second board part 1280 may be electrically connected to the first lens driving part and the second lens driving part. For example, the second board part 1280 may be coupled to the fourth coil and the second connecting member by a surface mount technology (SMT). However, the present invention is not limited to the method.

The second board part 1280 may include a circuit board having a line pattern which is to be electrically connected, such as a rigid printed circuit board (PCB), a flexible PCB, or a rigid flexible PCB. However, the present invention is not limited to the type.

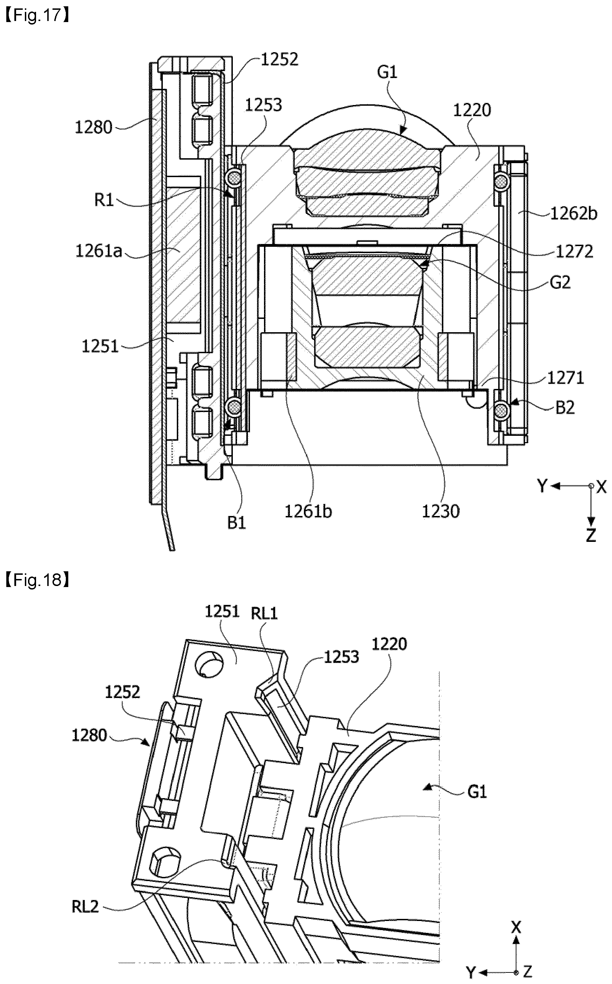

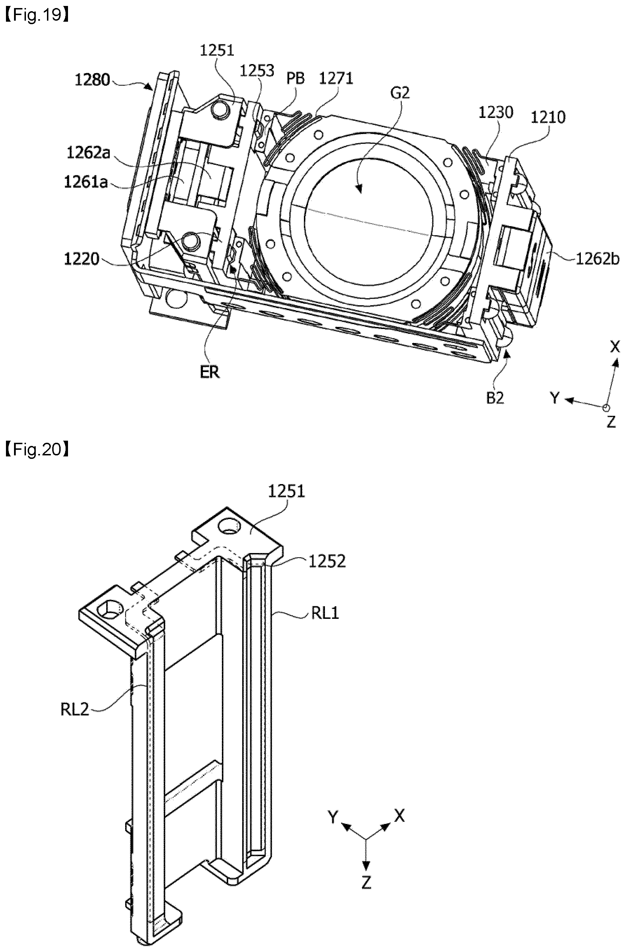

FIG. 17 is a cross-sectional view along line D-D' in FIG. 8, FIG. 18 is a view showing rear sides of some components of the second camera actuator according to the embodiment, FIG. 19 is a view showing a rear side of the second camera actuator according to the embodiment, and FIG. 20 is a perspective view of the guide part according to the embodiment.

Referring to FIGS. 17 to 20, a first ball B1 and a second ball B2 may be positioned on the first lens side surface and the second lens side surface of the first lens assembly 1220, respectively. Therefore, the first ball B1 and the second ball B2 may be positioned to face each other. In the embodiment, the second ball B2 may be disposed between the second lens side surface of the first lens assembly 1220 and the second side wall of the base.

In addition, the first ball B1 may be seated in the rail RL of the guide part 1250. In addition, the first ball B1 may be positioned between the guide part 1250 and the first lens assembly 1220. Therefore, the first ball B1 may move along the rail RL of the guide part in the third direction (Z-axis direction).

More specifically, a part of the first ball B1 may come into contact with the first connecting member 1252 positioned on the rail RL. The contact between the first ball B1 and the first connecting member 1252 may be maintained even when the first lens assembly 1220 moves along the rail RL. However, a contact region of the first ball B1 with the first connecting member 1252 may be changed by the movement of the first lens assembly 1220. In addition, the other portion of the first ball B1 may come into contact with the second connecting member 1253 positioned in the first recess R1.

In other words, the first ball B1 may come into contact with the first connecting member 1252 and the second connecting member 1253 between the first connecting member 1252 and the second connecting member 1253. Even when the first ball B1 rotates and the first lens assembly 1220 moves in the third direction (Z-axis direction), the contact between the first ball B1 and the first connecting member 1252 and the contact between the first ball B1 and the second connecting member 1253 can be maintained.

The second connecting member 1253 may be positioned on the first rail RL1 and the second rail RL2 of the body 1251.

In addition, the fourth coil 1261a may be disposed adjacent to the fourth magnet 1262a. Unlike the fourth coil, the fifth coil 1261b may be positioned between the fourth magnet 1262a and the fifth magnet 1262b. In the embodiment, the fifth coil 1261b is positioned at the middle between the fourth magnet 1262a and the fifth magnet 1262b. Therefore, the fifth coil 1261b may receive uniform magnetic force from each of the fourth magnet 1262a and the fifth magnet 1262b. In addition, the fourth magnet 1262a and the fifth magnet 1262b may have the same polarity in the second direction (Y-axis direction). Therefore, the movement of the second lens assembly 1230 by the second lens driving part may be accurately performed.

In addition, as described above, the second connecting member 1253 may include an exposed region ER on an inner surface thereof. The exposed region ER may be electrically connected to the first elastic member 1271 through a bonding member PB. In addition, the exposed region ER may be positioned at a rear end of the first elastic member 1271.

In other words, the second connecting member 1253 may be positioned in the first recess R1 overlapping in the second direction (the Y-axis direction) and may extend along a region between the adjacent first recesses R1. Furthermore, the second connecting member 1253 may further extend in the third direction (Z-axis direction) from the first recess R1.

In addition, the second connecting member 1253 may partially overlap the first recess R1 in the second direction (Y-axis direction). In addition, the second connecting member 1253 may partially overlap the first elastic member 1271 in the second direction (Y-axis direction). Therefore, the first elastic member 1271 and the second connecting member 1253 may be in contact with each other and may be electrically connected to each other.

Therefore, in order to provide a control signal for controlling the second lens driving part in the second camera actuator according to the embodiment to the fifth coil 1261b, an electrical flow IP may be formed from the second board part 1280 to the fifth coil 1261b via the first connecting member 1252, the second connecting member 1253, the first ball B1, and the first elastic member 1271.

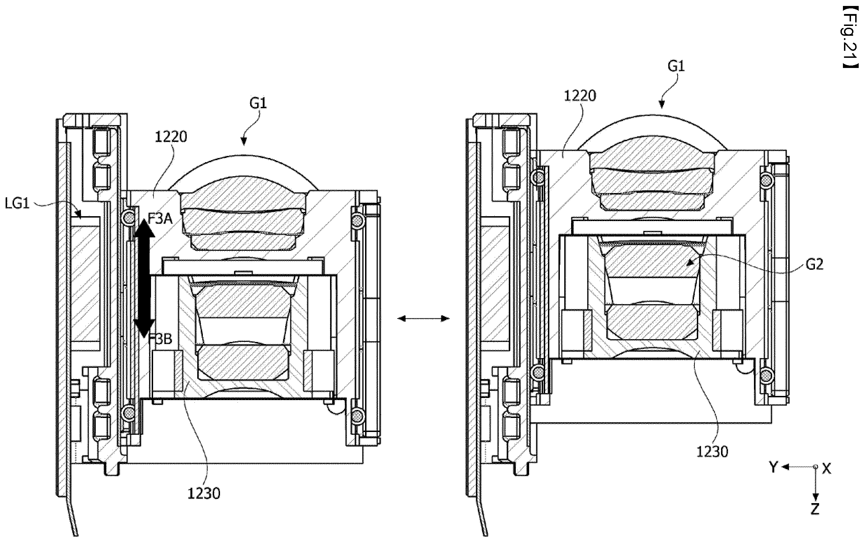

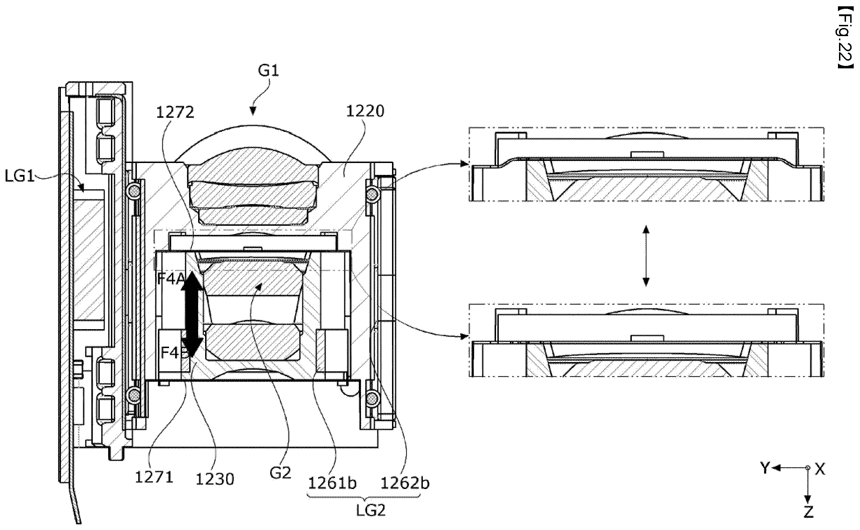

FIG. 21 is a view showing movement by the first lens driving part according to the embodiment, and FIG. 22 is a view showing movement by the second lens driving part according to the embodiment.

Referring to FIG. 21, in the embodiment, the first lens assembly 1220 may be moved by a first lens driving part NG1 in the third direction (Z-axis direction) to implement zooming or focusing.

In the embodiment, third electromagnetic forces F3A and F3B generated by the first lens driving part NG1 may move the first lens assembly 1220 in the third direction (Z-axis direction).

In addition, as the first lens assembly 1220 moves in the third direction (Z-axis direction), the second lens assembly 1230 also moves together with the first lens assembly 1220. In other words, the first lens assembly 1220 and the second lens assembly 1230 may be simultaneously moved by the third electromagnetic forces F3A and F3B generated by the first lens driving part NG1 by the same distance in the third direction (Z-axis direction) in the base.

Referring to FIG. 22, in the embodiment, the second lens assembly 1230 may be moved by a second lens driving part NG2 in the third direction (Z-axis direction) to implement zooming or focusing.

In the embodiment, fourth electromagnetic forces F4A and F4B generated by the second lens driving part NG2 may move the second lens assembly 1230 in the third direction (Z-axis direction) with respect to the first lens assembly 1220. At this time, when the third electromagnetic forces are not generated, the first lens assembly 1220 may not move in the third direction (Z-axis direction). In other words, the second lens assembly 1230 may be independently moved in the third direction (Z-axis direction) by the fourth electromagnetic forces F4A and F4B generated by the second lens driving part NG2 in the base with respect to the first lens assembly 1220.

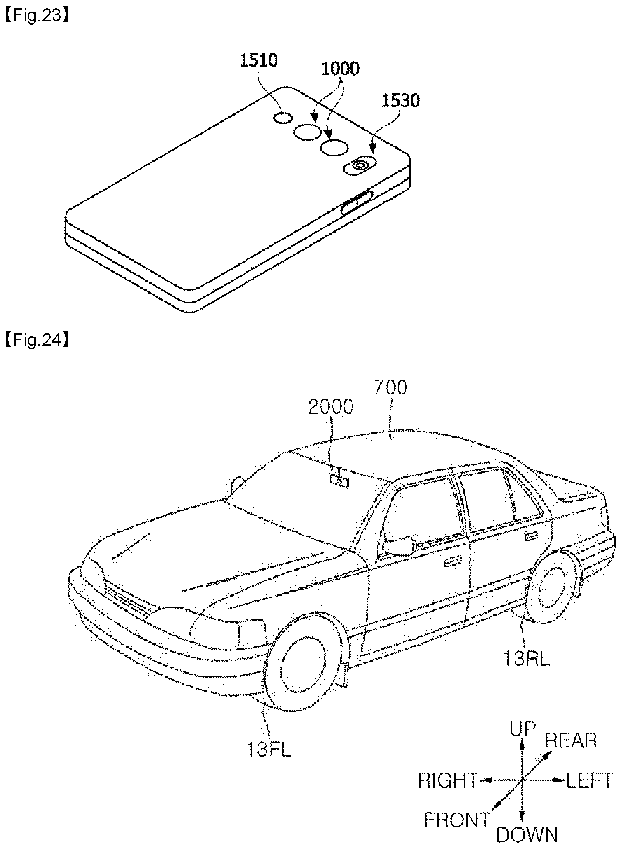

FIG. 23 is a perspective view of a mobile terminal to which the camera module according to the embodiment is applied.

Referring to FIG. 23, a mobile terminal 1500 may include a camera module 1000, a flash module 1530, and an AF device 1510 provided on a rear surface thereof.

The camera module 1000 may include an image capturing function and an AF function. For example, the camera module 1000 may include the AF function using an image.

The camera module 1000 processes an image frame of a still image or a moving image obtained by an image sensor in a capturing mode or a video call mode.

The processed image frame may be displayed on a predetermined display part and stored in a memory. A camera (not shown) may also be disposed on a front surface of a body of the mobile terminal.

For example, the camera module 1000 may include a first camera module 1000 and a second camera module 1000, and the OIS may be implemented together with the AF or zoom function by the first camera module 1000.

The flash module 1530 may include a light emitting device for emitting light therein. The flash module 1530 may be operated by a camera operation of the mobile terminal or a user's control.

The AF device 1510 may include one of packages of a surface light emitting laser device as a light emitting part.

The AF device 1510 may include the AF function using a laser. The AF device 1510 may be mainly used in a condition in which the AF function using the image of the camera module 1000 is degraded, for example, in an environment in which a subject is close to 10 m or less or in a dark environment.

The AF device 1510 may include a light emitting part including a vertical cavity surface emitting laser (VCSEL) semiconductor device and a light receiving part for converting light energy into electrical energy, such as a photodiode.

FIG. 24 is a perspective view of a vehicle to which the camera module according to the embodiment is applied.

For example, FIG. 24 is an external view of the vehicle including a vehicle driver assistance device to which the camera module 1000 according to the embodiment is applied.

Referring to FIG. 24, a vehicle 700 in the embodiment may include wheels 13FL and 13FR rotated by a power source and a predetermined sensor. The sensor may be a camera sensor 2000, but the present invention is not limited thereto.

The camera sensor 2000 may be a camera sensor to which the camera module 1000 according to the embodiment is applied. The vehicle 700 in the embodiment may acquire image information through the camera sensor 2000 for capturing a front image or a surrounding image, determine a situation in which a lane marking is not identified using the image information, and generate a virtual lane marking when the lane marking is not identified.

For example, the camera sensor 2000 may acquire a front image by capturing a view in front of the vehicle 700, and a processor (not shown) may acquire image information by analyzing an object included in the front image.

For example, when objects, such as a median, a curb, or a street tree corresponding to a lane marking, an adjacent vehicle, a traveling obstacle, and an indirect road mark, are captured in the image captured by the camera sensor 2000, the processor may detect the object and include the detected object in the image information. At this time, the processor may further supplement the image information by acquiring distance information to the object detected through the camera sensor 2000.

The image information may be information on the object captured in the image. The camera sensor 2000 may include an image sensor and an image processing module.

The camera sensor 2000 may process a still image or a moving image obtained by the image sensor (e.g., a complementary metal-oxide semiconductor (CMOS) or a charge-coupled device (CCD)).

The image processing module may process the still image or moving image acquired through the image sensor to extract necessary information, and transmit the extracted information to the processor.

At this time, the camera sensor 2000 may include a stereo camera for improving the measurement accuracy of the object and further securing information such as a distance between the vehicle 700 and the object, but the present invention is not limited thereto.

Although embodiments have been mainly described above, these are only illustrative and do not limit the present invention, and those skilled in the art to which the present invention pertains will understand that various modifications and applications not exemplified above are possible without departing from the essential characteristics of the embodiments. For example, each component specifically shown in the embodiments may be implemented by modification. In addition, differences related to these modifications and applications should be construed as being included in the scope of the present invention defined in the appended claims.

## Claims

1. A camera actuator (1200) comprising:
a base (1210) including a first side wall (1210a) and a second side wall (1210b) corresponding to the first side wall (1210a);
a guide part (1250) disposed adjacent to at least one of the first side wall (1210a) and the second side wall (1210b);
a first lens assembly (1220) and a second lens assembly (1230) that is movable relative to the first lens assembly (1220) in the first lens assembly (1220), in the optical axis direction;
a driving part (1260) configured to move the first lens assembly (1220) and the second lens assembly (1230); and
a first ball disposed on an upper side portion of the first lens assembly (1220) and a second ball disposed on a lower side portion thereof,
wherein the first lens assembly (1220) moves along the guide part (1250) through the first ball and the second ball, in the optical axis direction,
**characterized in that** the driving part (1260) includes:
a first lens driving part (LG1) including a fourth coil (1261a) and a fourth magnet (1262a) positioned in the guide part (1250); and
a second lens driving part (LG2) including a fifth coil (1261b) positioned inside the first lens assembly (1220) and a fifth magnet (1262b) positioned between the second side wall (1210b) and the first lens assembly (1220),
wherein the fifth coil (1261b) is positioned between the fourth magnet (1262a) and the fifth magnet (1262b).

2. The camera actuator of claim 1, wherein the first ball is disposed between the first lens assembly (1220) and the guide part (1250), and
the second ball is disposed between the first lens assembly (1220) and the second side wall (1210b)

3. The camera actuator of claim 2, wherein the first lens assembly (1220) includes:
a first recess (R1) in which the first ball is seated; and
a second recess (R2) in which the second ball is seated

4. The camera actuator of claim 3, wherein the guide part (1250) includes:
a body (1251) including a rail;
a first connecting member (1252) positioned on the rail; and
a second connecting member (1253) disposed between the first recess (R1) and the first ball and extending in an optical axis direction.

5. The camera actuator of claim 4, wherein the first ball is disposed between the first connecting member (1252) and the second connecting member (1253), and at least partially comes into contact with the first connecting member (1252) and the second connecting member (1253).

6. The camera actuator of claim 4, wherein the first connecting member (1252) includes an extension (1252P) extending to an outside of the body (1251).

7. The camera actuator of claim 6, further comprising a board part (1280) disposed outside the guide part (1250),
wherein the extension (1252P) is electrically connected to the board part (1280).

8. The camera actuator of claim 4, wherein the first ball is made of a conductive material.

9. The camera actuator of claim 4, further comprising an elastic part (1270) configured to connect the second lens assembly (1230) and the first lens assembly (1220),
wherein the second coil (1261b) is electrically connected to the first connecting member (1252), the first ball, the second connecting member (1253), and the elastic part (1270).

10. The camera actuator of claim 4, wherein a shape of the first connecting member (1252) corresponds to a shape of the rail.

11. The camera actuator of claim 1, wherein the first lens assembly (1220) is disposed in the base (1210).

12. The camera actuator of claim 4, wherein the second coil is positioned inside the fourth coil (1261a).

13. The camera actuator of claim 12, wherein the fourth magnet (1262a) is positioned to correspond to the fifth magnet (1262b) in the optical axis direction, and the fourth coil (1261a) is positioned to be misaligned with the fifth coil (1261b) in the optical axis direction.

14. The camera actuator of claim 4, wherein the fifth coil (1261b) surrounds the second lens assembly (1230).

## Patentansprüche

1. Kameraaktuator (1200), umfassend:
eine Basis (1210), einschließlich einer ersten Seitenwand (1210a) und einer zweiten Seitenwand (1210b), die der ersten Seitenwand (1210a) entspricht;
ein Führungsteil (1250), das angrenzend an mindestens eine der ersten Seitenwand (1210a) und der zweiten Seitenwand (1210b) eingerichtet ist;
eine erste Linsenanordnung (1220) und eine zweite Linsenanordnung (1230), die in der ersten Linsenanordnung (1220), in der Richtung einer optischen Achse, relativ zu der ersten Linsenanordnung (1220) bewegbar ist;
ein Antriebsteil (1260), das konfiguriert ist, um die erste Linsenanordnung (1220) und die zweite Linsenanordnung (1230) zu bewegen; und
eine erste Kugel, die an einem oberen Seitenabschnitt der ersten Linsenanordnung (1220) eingerichtet ist, und eine zweite Kugel, die an einem unteren Seitenabschnitt davon eingerichtet ist,
wobei sich die erste Linsenanordnung (1220) entlang des Führungsteils (1250) durch die erste Kugel und die zweite Kugel, in der Richtung der optischen Achse, bewegt,
**dadurch gekennzeichnet, dass** das Antriebsteil (1260) einschließt:
ein erstes Linsenantriebsteil (LG1), einschließlich einer vierten Spule (1261a) und eines vierten Magneten (1262a), die in dem Führungsteil (1250) positioniert sind; und
ein zweites Linsenantriebsteil (LG2), einschließlich einer fünften Spule (1261b), die im Inneren der ersten Linsenanordnung (1220) positioniert ist, und eines fünften Magneten (1262b), der zwischen der zweiten Seitenwand (1210b) und der ersten Linsenanordnung (1220) positioniert ist,
wobei die fünfte Spule (1261b) zwischen dem vierten Magneten (1262a) und dem fünften Magneten (1262b) positioniert ist.

2. Kameraaktuator nach Anspruch 1, wobei die erste Kugel zwischen der ersten Linsenanordnung (1220) und dem Führungsteil (1250) eingerichtet ist und
die zweite Kugel zwischen der ersten Linsenanordnung (1220) und der zweiten Seitenwand (1210b) eingerichtet ist.

3. Kameraaktuator nach Anspruch 2, wobei die erste Linsenanordnung (1220) einschließt:
eine erste Aussparung (R1), in der die erste Kugel sitzt; und
eine zweite Aussparung (R2), in der die zweite Kugel sitzt.

4. Kameraaktuator nach Anspruch 3, wobei das Führungsteil (1250) einschließt:
einen Körper (1251), einschließlich einer Schiene;
ein erstes Verbindungselement (1252), das an der Schiene positioniert ist;
und
ein zweites Verbindungselement (1253), das zwischen der ersten Aussparung (R1) und der ersten Kugel eingerichtet ist und sich in einer Richtung der optischen Achse erstreckt.

5. Kameraaktuator nach Anspruch 4, wobei die erste Kugel zwischen dem ersten Verbindungselement (1252) und dem zweiten Verbindungselement (1253) eingerichtet ist und mit dem ersten Verbindungselement (1252) und dem zweiten Verbindungselement (1253) mindestens teilweise in Berührung kommt.

6. Kameraaktuator nach Anspruch 4, wobei das erste Verbindungselement (1252) eine Verlängerung (1252P) einschließt, die sich zu einer Außenseite des Körpers (1251) erstreckt.

7. Kameraaktuator nach Anspruch 6, ferner umfassend ein Plattenteil (1280), das an der Außenseite des Führungsteils (1250) eingerichtet ist,
wobei die Verlängerung (1252P) mit dem Plattenteil (1280) elektrisch verbunden ist.

8. Kameraaktuator nach Anspruch 4, wobei die erste Kugel aus einem leitfähigen Material hergestellt ist.

9. Kameraaktuator nach Anspruch 4, ferner umfassend ein elastisches Teil (1270), das konfiguriert ist, um die zweite Linsenanordnung (1230) und die erste Linsenanordnung (1220) zu verbinden,
wobei die zweite Spule (1261b) mit dem ersten Verbindungselement (1252), der ersten Kugel, dem zweiten Verbindungselement (1253) und dem elastischen Teil (1270) elektrisch verbunden ist.

10. Kameraaktuator nach Anspruch 4, wobei eine Form des ersten Verbindungselements (1252) einer Form der Schiene entspricht.

11. Kameraaktuator nach Anspruch 1, wobei die erste Linsenanordnung (1220) in der Basis (1210) eingerichtet ist.

12. Kameraaktuator nach Anspruch 4, wobei die zweite Spule im Inneren der vierten Spule (1261a) positioniert ist.

13. Kameraaktuator nach Anspruch 12, wobei der vierte Magnet (1262a) positioniert ist, um in der Richtung der optischen Achse dem fünften Magneten (1262b) zu entsprechen, und
die vierte Spule (1261a) positioniert ist, um in der Richtung der optischen Achse mit der fünften Spule (1261b) fehlausgerichtet zu sein.

14. Kameraaktuator nach Anspruch 4, wobei die fünfte Spule (1261b) die zweite Linsenanordnung (1230) umgibt.

## Revendications

1. Actionneur de caméra (1200) comprenant :
une base (1210) incluant une première paroi latérale (1210a) et une seconde paroi latérale (1210b) correspondant à la première paroi latérale (1210a) ;
une pièce de guidage (1250) disposée à côté d'au moins l'une de la première paroi latérale (1210a) et de la seconde paroi latérale (1210b) ;
un premier ensemble de lentilles (1220) et un second ensemble de lentilles (1230) qui est mobile par rapport au premier ensemble de lentilles (1220) dans le premier ensemble de lentilles (1220), dans la direction de l'axe optique ;
une partie d'entraînement (1260) configurée pour déplacer le premier ensemble de lentilles (1220) et le second ensemble de lentilles (1230) ; et
une première bille disposée sur une partie latérale supérieure du premier ensemble de lentilles (1220) et une seconde bille disposée sur une partie latérale inférieure de celle-ci,
dans lequel le premier ensemble de lentilles (1220) se déplace le long de la pièce de guidage (1250) à travers la première bille et la seconde bille, dans la direction de l'axe optique,
**caractérisé en ce que** l'unité d'entraînement (1260) inclut :
une première partie d'entraînement de lentilles (LG1) incluant un quatrième enroulement (1261a) et un quatrième aimant (1262a) positionnés dans la pièce de guidage (1250) ; et
une seconde partie d'entraînement de lentilles (LG2) incluant un cinquième enroulement (1261b) positionné à l'intérieur du premier ensemble de lentilles (1220) et un cinquième aimant (1262b) positionné entre la seconde paroi latérale (1210b) et le premier ensemble de lentilles (1220),
dans lequel le cinquième enroulement (1261b) est positionné entre le quatrième aimant (1262a) et le cinquième aimant (1262b).

2. Actionneur de caméra selon la revendication 1, dans lequel la première bille est disposée entre le premier ensemble de lentilles (1220) et la pièce de guidage (1250), et
la seconde bille est disposée entre le premier ensemble de lentilles (1220) et la seconde paroi latérale (1210b).

3. Actionneur de caméra selon la revendication 2, dans lequel le premier ensemble de lentilles (1220) inclut :
un premier évidement (R1) dans lequel la première bille est logée ; et
un second évidement (R2) dans lequel la seconde bille est logée.

4. Actionneur de caméra selon la revendication 3, dans lequel la pièce de guidage (1250) inclut :
un corps (1251) incluant un rail ;
un premier élément de liaison (1252) positionné sur le rail ; et
un second élément de liaison (1253) disposé entre le premier évidement (R1) et la première bille et s'étendant dans une direction de l'axe optique.

5. Actionneur de caméra selon la revendication 4, dans lequel la première bille est disposée entre le premier élément de liaison (1252) et le second élément de liaison (1253), et entre au moins partiellement en contact avec le premier élément de liaison (1252) et le second élément de liaison (1253).

6. Actionneur de caméra selon la revendication 4, dans lequel le premier élément de liaison (1252) inclut une extension (1252P) s'étendant à l'extérieur du corps (1251).

7. Actionneur de caméra selon la revendication 6, comprenant, en outre, une partie carte(1280) disposée à l'extérieur de la pièce de guidage (1250),
dans lequel l'extension (1252P) est reliée électriquement à la partie carte (1280).

8. Actionneur de caméra selon la revendication 4, dans lequel la première bille est en matériau conducteur.

9. Actionneur de caméra selon la revendication 4, comprenant, en outre, une partie élastique (1270) configurée pour relier le second ensemble de lentilles (1230) et le premier ensemble de lentilles (1220),
dans lequel le deuxième enroulement (1261b) est relié électriquement au premier élément de liaison (1252), à la première bille, au second élément de liaison (1253) et à la partie élastique (1270).

10. Actionneur de caméra selon la revendication 4, dans lequel une forme du premier élément de liaison (1252) correspond à une forme du rail.

11. Actionneur de caméra selon la revendication 1, dans lequel le premier ensemble de lentilles (1220) est disposé dans la base (1210).

12. Actionneur de caméra selon la revendication 4, dans lequel le deuxième enroulement est positionné à l'intérieur du quatrième enroulement (1261a).

13. Actionneur de caméra selon la revendication 12, dans lequel le quatrième aimant (1262a) est positionné pour correspondre au cinquième aimant (1262b) dans la direction de l'axe optique, et le quatrième enroulement (1261a) est positionné pour être désalignée avec le cinquième enroulement (1261b) dans la direction de l'axe optique.

14. Actionneur de caméra selon la revendication 4, dans lequel le cinquième enroulement (1261b) entoure le second ensemble de lentilles (1230).
